# EUROPEAN PATENT APPLICATION

(11) **EP 4 572 391 A1**
(43) Date of publication of application: **18.06.2025**
(21) Application number: 23852289.0
(22) Date of filing: 07.07.2023
(51) Int. Cl.: H04W 28/06, H04W 24/10, H04W 72/1268

(54) **DEVICE AND METHOD**

(30) Priority: 09.08.2022 JP 2022127462
(71) Applicant: DENSO CORPORATION, Kariya-city, Aichi 448-8661 (JP)
(72) Inventor: NAGANO, Tatsuki, Kariya- city, Aichi 4488661 (JP)
(74) Representative: TBK
(86) International application number: PCT/JP2023/025358
(87) International publication number: WO 2024/034306

(57) **Abstract**

An apparatus (200) according to an aspect of the present disclosure includes: a communication processing unit (233) configured to receive a message including configuration information for determining whether a buffer status report is used; and an information obtaining unit (231) configured to obtain the configuration information included in the message. The buffer status report includes at least one of first fields and at least one of modified second fields. The buffer status report is used for providing information on an uplink data amount. The at least one of the first fields indicates at least one of logical channel groups for which a buffer status is reported. The at least one of the modified second fields corresponds to the at least one of the logical channel groups and is associated with the uplink data amount.

## Description

### CROSS-REFERENCE TO RELATED APPLICATIONS

This application is based on Japanese Patent Application No. 2022-127462, filed on August 9, 2022, the content of which is incorporated herein.

### Technical Field

The present disclosure relates to an apparatus and a method.

### Background Art

Mobile communication technologies have been proposed and defined in technical specifications (TSs) in 3rd Generation Partnership Project (3GPP) (registered trademark). Currently in particular, the 5th generation (5G) technology has been proposed and defined in TSs.

In a system of mobile communication, a base station assigns a communication resource for uplink (UL) transmission to a user equipment (UE). As described in NPL 1, the user equipment transmits a scheduling request (SR) to the base station to request the communication resource assignment for the UL transmission. The user equipment uses the assigned communication resource to transmit UL data to the base station.

In addition, as described in NPL 1, the UE transmits, to the base station, a buffer status report (BSR) for providing information on the UL data amount. The BSR indicates the range of the buffer size of the UL data. This allows the base station to assign the communication resource corresponding to the range of the buffer size of the UL data indicated by the BSR. Note that the BSR indicates the range of the buffer size and thus has a quantization error. In addition, as described in NPL 2, an SR parameter and a BSR parameter are configured in the radio resource control (RRC) layer.

Furthermore, as described in NPLs 3 to 5, the application of the system of the mobile communication to an extended reality (XR) service has been recently proposed. Data of the XR service, however, has the features of a large volume and high variability. The quantization error of the BSR therefore causes communication resources to be wasted and decreases the efficiency of scheduling. As countermeasures, for example, NPL 3 proposes that an accurate buffer size be determined through the BSR. In addition, the XR service may have a delay requirement (e.g., packet delay budget (PDB)). As countermeasures, for example, NPL 4 proposes that the BSR include delay information and scheduling which takes delay into consideration be performed to satisfy the PDB.

### Citation List

### Non Patent Literature

NPL 1: 3GPP TS 38.321 V17.0.0 (2022-03), "3rd Generation Partnership Project; Technical Specification Group Radio Access Network; NR; Medium Access Control (MAC) protocol specification (Release 17)"
NPL 2: 3GPP TS 38.331 V17.1.0 (2022-06), "3rd Generation Partnership Project; Technical Specification Group Radio Access Network; NR; Radio Resource Control (RRC) protocol specification (Release 17)"
NPL 3: 3GPP TSG RAN WG1 #109-e, e-Meeting, May 9th - 20th, 2022, R1-2203607, "Discussion on XR specific capacity enhancements techniques"
NPL 4: 3GPP TSG-RAN WG1 Meeting #109-e, Online, May 9th - 20th, 2022, R1-2203639, "Discussion on capacity enhancements for XR"
NPL 5: 3GPP TSG RAN WG1 #109-e, e-Meeting, May 9th - 20th, 2022, R1-2203928, "Considerations on XR Capacity Improvements"

### Summary of the Invention

A detailed study by the inventor has revealed the following issue. That is, Non Patent Literatures each propose a concept for scheduling UL data by using a BSR, but do not propose any specific methods.

An object of the present disclosure is to provide an apparatus and a method that each make it possible to increase the efficiency of scheduling UL data by using a BSR.

An apparatus (200) according to an aspect of the present disclosure includes: a communication processing unit (233) configured to receive a message including configuration information for determining whether a buffer status report is used; and an information obtaining unit (231) configured to obtain the configuration information included in the message. The buffer status report includes at least one of first fields and at least one of modified second fields. The buffer status report is used for providing information on an uplink data amount. The at least one of the first fields indicates at least one of logical channel groups for which a buffer status is reported. The at least one of the modified second fields corresponds to the at least one of the logical channel groups and is associated with the uplink data amount.

An apparatus (100) according to an aspect of the present disclosure includes: an information obtaining unit (141) configured to obtain configuration information for determining whether a buffer status report is used; and a communication processing unit (143) configured to transmit a message including the configuration information. The buffer status report includes at least one of first fields and at least one of modified second fields. The buffer status report is used for providing information on an uplink data amount. The at least one of the first fields indicates at least one of logical channel groups for which a buffer status is reported. The at least one of the modified second fields corresponds to the at least one of the logical channel groups and is associated with the uplink data amount.

A method performed by an apparatus (200) according to an aspect of the present disclosure includes: receiving a message including configuration information for determining whether a buffer status report is used; and obtaining the configuration information included in the message. The buffer status report includes at least one of first fields and at least one of modified second fields. The buffer status report is used for providing information on an uplink data amount. The at least one of the first fields indicates at least one of logical channel groups for which a buffer status is reported. The at least one of the modified second fields corresponds to the at least one of the logical channel groups and is associated with the uplink data amount.

A method performed by an apparatus (100) according to an aspect of the present disclosure includes: obtaining configuration information for determining whether a buffer status report is used; and transmitting a message including the configuration information. The buffer status report includes at least one of first fields and at least one of modified second fields. The buffer status report is used for providing information on an uplink data amount. The at least one of the first fields indicates at least one of logical channel groups for which a buffer status is reported. The at least one of the modified second fields corresponds to the at least one of the logical channel groups and is associated with the uplink data amount.

According to the present disclosure, it is possible to increase the efficiency of scheduling UL data by using a BSR. Note that, instead of or in addition to this advantageous effect, the present disclosure may yield another advantageous effect.

### Brief Description of the Drawings

Fig. 1 is an explanatory diagram illustrating an example of UL data transmission.
Fig. 2 is a diagram illustrating a Short BSR.
Fig. 3 is a diagram illustrating a buffer size table.
Fig. 4 is a diagram illustrating a Long BSR.
Fig. 5 is an explanatory diagram illustrating an example of a schematic configuration of a system according to an embodiment of the present disclosure.
Fig. 6 is a block diagram illustrating an example of a schematic functional configuration of a base station according to an embodiment of the present disclosure.
Fig. 7 is a block diagram illustrating an example of a schematic hardware configuration of the base station according to the embodiment of the present disclosure.
Fig. 8 is a block diagram illustrating an example of a schematic functional configuration of a user equipment according to an embodiment of the present disclosure.
Fig. 9 is a block diagram illustrating an example of a schematic hardware configuration of the user equipment according to the embodiment of the present disclosure.
Fig. 10 is a diagram illustrating an example of a BSR according to a first embodiment of the present disclosure.
Fig. 11 is a diagram illustrating an example of configuration information for determining whether the BSR according to the first embodiment of the present disclosure is used.
Fig. 12 is a diagram for explaining an example of the configuration information according to the first embodiment of the present disclosure.
Fig. 13 is a sequence diagram for explaining an example of a schematic flow of processing according to the first embodiment of the present disclosure.
Fig. 14 is a diagram illustrating an example of the configuration information according to a first modification example 1 of the first embodiment of the present disclosure.
Fig. 15 is a diagram for explaining the example of the configuration information according to the first modification example 1 of the first embodiment of the present disclosure.
Fig. 16 is a diagram illustrating an example of the configuration information according to a first modification example 2 of the first embodiment of the present disclosure.
Fig. 17 is a diagram for explaining the example of the configuration information according to the first modification example 2 of the first embodiment of the present disclosure.
Fig. 18 is a diagram illustrating an example of the configuration information according to a first modification example 3 of the first embodiment of the present disclosure.
Fig. 19 is a diagram for explaining the example of the configuration information according to the first modification example 3 of the first embodiment of the present disclosure.
Fig. 20 is a diagram illustrating an example of configuration information including the configuration information according to a second modification example of the first embodiment of the present disclosure.
Fig. 21A is a diagram illustrating an example of a BSR according to a second embodiment of the present disclosure.
Fig. 21B is a diagram illustrating another example of the BSR according to the second embodiment of the present disclosure.
Fig. 22 is a diagram illustrating an example of configuration information for determining whether the BSR according to the second embodiment of the present disclosure is used.
Fig. 23 is a diagram for explaining an example of the configuration information according to the second embodiment of the present disclosure.
Fig. 24 is a diagram illustrating an example of a BSR according to a fourth modification example of the second embodiment of the present disclosure.

### Description of the Embodiments

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order.
1. Related Technology
2. Configuration of System
3. Configuration of Base Station
4. Configuration of User Equipment
5. First Embodiment
5-1. Operation Examples
5-2. Modification Examples
6. Second Embodiment
6-1. Operation Examples
6-2. Modification Examples

### <1. Related Technology>

As technologies related to an embodiment of the present disclosure, a scheduling request (SR) and a buffer status report (BSR) will be described.

### (1) Scheduling Request (SR)

An SR is used for a UE to request a base station to assign a communication resource for new UL transmission. For example, the SR may be used for requesting an uplink-shared channel (UL-SCH) resource for initial transmission. Here, the UL-SCH may be mapped to a physical uplink shared channel (PUSCH). In the present embodiment, UL-SCH data is also described as UL data. A plurality of bandwidth parts (BWP) and/or a physical uplink control channel (PUCCH) resource set across cells are assigned as SR communication resources. For each of the logical channels, up to one PUCCH resource is assigned to each of the BWPs for an SR. For example, one or more downlink BWPs and/or one or more uplink BWPs may be configured in each of one or more cells (also referred to as serving cells). For example, the PUCCH resource set may be configured for the one or more respective uplink BWPs.

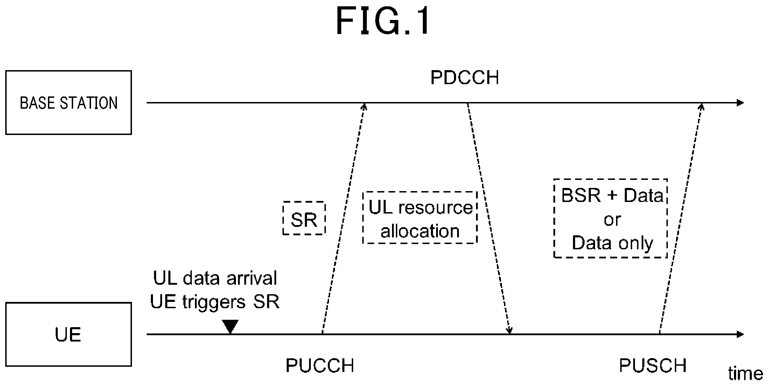

An example of UL transmission that uses an SR will be described with reference to Fig. 1. When UL data arrives, a UE triggers an SR. The SR is transmitted to a base station by using a PUCCH. The base station that receives the SR assigns, to the UE, a resource for transmitting the UL data. The UL resource assignment is transmitted to the UE by using a physical downlink control channel (PDCCH). The UE that receives the UL resource assignment uses an assigned PUSCH resource to transmit the UL data to the base station. A BSR may also be transmitted along with the UL data. In the present embodiment, the UL resource assignment includes UL-SCH assignment and/or PUSCH resource assignment. In addition, the PUSCH resource assignment includes PUSCH resource assignment in the frequency domain (frequency domain resource assignment) and/or PUSCH resource assignment in the time domain (time domain resource assignment). For example, the base station may transmit downlink control information (DCI) used for PUSCH scheduling on the PDCCH. That is, the DCI may include information (one or more fields) for the PUSCH resource assignment.

An SR parameter is configured by using SchedulingRequestConfig and/or SchedulingRequestResourceConfig that is RRC configuration information. For example, the SR parameter is a parameter used for transmitting an SR and/or configuring an SR resource and is also referred to as an SR configuration. The SR parameter may include SchedulingRequestConfig and/or SchedulingRequestResourceConfig. In addition, the SR parameter may include schedulingRequestID, sr-ProhibitTimer, sr-TransMax, periodicity AndOffset, phy-PriorityIndex, resource, and/or the like. Each of the SR configurations corresponds to one or more logical channels. For example, each of the SR configurations may correspond to one or more logical channels (and/or beam failure recovery (BFR)) through schedulingRequestID. schedulingRequestID may be used in the MAC layer to identify an SR instance. sr-ProhibitTimer may be used for configuring a timer for SR transmission on a PUCCH. sr-TransMax may be used for configuring the maximum number of times an SR is transmitted. periodicityAndOffset may be used for configuring SR periodicity and offset. phy-PriorityIndex may be used for configuring the priority of an SR resource in prioritization or multiplexing in the PHY layer. The parameter "resource" may be used for configuring a PUCCH resource identifier (ID) used for transmitting an SR. For example, the PUCCH resource corresponding to the PUCCH resource ID included in the SR parameters may be configured for transmitting an SR on the basis of the SR parameter. The PUCCH resource may be configured in PUCCH format 0 or PUCCH format 1 including information used for configuring a PUCCH resource.

Here, the RRC configuration information may include information transmitted and/or received in the RRC layer between a base station and a UE. That is, the base station may transmit an RRC message including an SR configuration to the UE. In addition, the UE may receive the RRC message including the SR configuration and transmit an SR on the basis of the SR configuration. In addition, the UE may receive the RRC message including the SR configuration and determine a PUCCH resource to be used for transmitting an SR on the basis of the SR configuration. For example, the RRC message may include an RRCreconfiguration message.

### (2) Buffer Status Report (BSR)

A BSR procedure (also referred to as a buffer status reporting procedure) is used for providing information on a UL data amount (volume) in a UE to a base station. That is, a BSR is used in a procedure (buffer status reporting) for providing information on the UL data amount of a MAC entity to a base station. The BSR is transmitted by using a MAC control element (CE). That is, an operation associated with the BSR may be executed and/or processed in the MAC layer (e.g., MAC entity) in the UE. In addition, an operation associated with the BSR may be executed and/or processed in the MAC layer (e.g., MAC entity) in the base station. In the present embodiment, a higher layer includes a layer higher than the MAC layer. For example, the higher layer may include the RRC layer.

A parameter associated with a BSR is configured by using RRC configuration information. The BSR parameter includes periodicBSR-Timer, retxBSR-Timer, logicalChannelSR-DelayTimerApplied, logical Channel SR-Delay Timer, logicalChannelSR-Mask, logical Channel Group, and the like. periodicBSR-Timer may be used for configuring a timer for BSR periodicity. retxBSR-Timer may be used for configuring a timer for BSR retransmission. logicalChannelSR-DelayTimerApplied may be used for configuring whether a delay timer is applied for SR transmission for a logical channel. logical Channel SR-Delay Timer may be used for configuring a delay timer for SR transmission for a logical channel. logicalChannelSR-Mask may be used for configuring SR trigger control (i.e., whether SR masking is configured) in a case where configured grant is configured. logicalChannelGroup may be used for configuring the ID of a logical channel group to which a logical channel belongs. A base station may transmit an RRC message including a parameter associated with a BSR to a UE. In addition, the UE may receive the RRC message including the parameter associated with the BSR and report (i.e., transmit) the BSR on the basis of the parameter associated with the BSR.

The BSR is reported for each of logical channel groups (LCGs). Each of the logical channels is assigned to any of the LCGs by logicalChannelGroup indicating the ID of the LCG.

A BSR may be triggered for an activated cell group when any of the following occurs. Note that the following trigger mechanism classifies BSRs into a Regular BSR corresponding to (A) and (C), a Periodic BSR corresponding to (D), and a Padding BSR corresponding to (B).
(A) UL data of a logical channel belonging to any of LCGs is available to a MAC entity.
(B) A UL resource is assigned and the number of padding bits of the UL resource is greater than or equal to the size of a BSR MAC CE.
(C) The period indicated by retxBSR-Timer expires and UL data is included in at least one of the logical channels belonging to any of LCGs.
(D) The period indicated by periodicBSR-Timer expires.

Next, a BSR MAC CE will be described. The BSR MAC CE may correspond to a MAC CE used for transmitting the BSR described above. For example, the format of the BSR MAC CE (also referred to as a BSR format below) is defined as some types (e.g., a Short BSR and a Long BSR) and identified on the basis of a MAC subheader including an LCID/eLCID. That is, a logical channel identifier (LCID)/an extended LCID (eLCID) may be used for identifying the corresponding type of the MAC CE. In addition, the LCID/eLCID for each of a downlink-shared channel (DL-SCH) and/or a UL-SCH may be defined. The LCID/eLCID will indicate an LCID and/or an eLCID below.

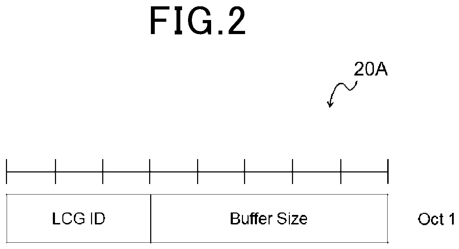

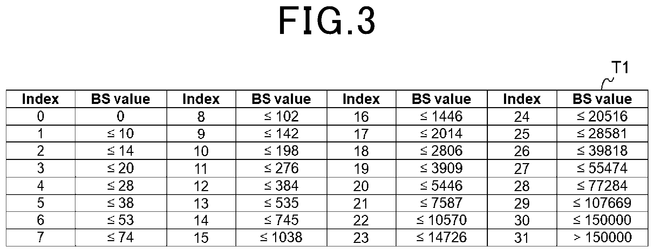

A format 20A of a Short BSR will be described with reference to Figs. 2 and 3. The Short BSR has a fixed size. As illustrated in Fig. 2, the Short BSR includes an LCG ID field and a Buffer Size field. The LCG ID field identifies an LCG ID for which the buffer size is reported. The LCG ID field has a 3-bit size. The Buffer Size field identifies the total amount of data available to all of the logical channels belonging to the LCG indicated by the LCG ID. The Buffer Size field has a 5-bit size. The Buffer Size field indicates the index corresponding to a buffer size in a table T1 for the 5-bit Buffer Size field. The table T1 is illustrated in Fig. 3.

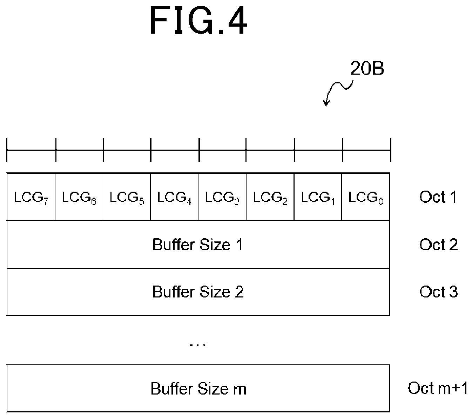

A format 20B of a Long BSR will be described with reference to Fig. 4. The Long BSR has a variable size. As illustrated in Fig. 4, the Long BSR includes an LCGi field and a Buffer Size j field. The LCGi is the LCG having the i-th ID and the LCGi field indicates the presence of the Buffer Size field for the LCGi. The LCGi field is set to 1 in a case where the buffer size is reported. Otherwise, the LCGi field is set to 0. Alternatively, the LCGi field may indicate whether the LCGi has available data. The Buffer Size j field identifies the total amount of data available to all of the logical channels belonging to the corresponding LCGi. The Buffer Size j has an 8-bit size. The Buffer Size j indicates the index corresponding to a buffer size in an unillustrated table for the 8-bit Buffer Size field. Note that the Buffer Size j field is included in an ascending order depending on the LCGi.

A BSR format is selected in accordance with a method defined in the TSs (TSs 38.321 5.4.5 and 5/4.7).

For example, in the case of a Regular BSR and a Periodic BSR, a Long BSR is reported in the presence of two or more LCGs each having available data when a MAC PDU including a BSR is built. Otherwise, a Short BSR is reported. Furthermore, an Extended Long BSR or an Extended Short BSR may be reported for a MAC entity for which logicalChannelGroup-IABExt is configured by a higher layer.

In addition, for example, in the case of a Padding BSR, a Short Truncated BSR, a Long Truncated BSR, an Extended Short Truncated BSR, and an Extended Long Truncated BSR are reported depending on a condition in addition to the BSR formats.

In addition, for example, a Pre-emptive BSR and an Extended Pre-emptive BSR are used by an IAB-mobile termination (IAB-MT).

### <2. Configuration of System>

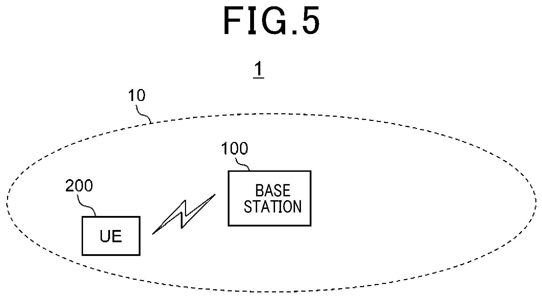

An example of the configuration of a system 1 according to an embodiment of the present disclosure will be described with reference to Fig. 5. Referring to Fig. 5, the system 1 includes a base station 100 and a UE 200.

For example, the system 1 is a system compliant with TSs in 3GPP. More specifically, for example, the system 1 is a system compliant with the TSs of 5G or new radio (NR). Naturally, the system 1 is not limited to this example.

### (1) Base Station 100

The base station 100 is a node in a radio access network (RAN) and communicates with a UE (e.g., UE 200) located within a coverage area 10 of the base station 100.

For example, the base station 100 communicates with a UE (for example, UE 200) using a RAN protocol stack. For example, the protocol stack includes protocols of radio resource control (RRC), service data adaptation protocol (SDAP), packet data convergence protocol (PDCP), radio link control (RLC), medium access control (MAC), and physical (PHY) layers. Alternatively, the protocol stack does not have to include all of these protocols, but may include some of these protocols.

For example, the base station 100 is a gNB. The gNB is a node that provides NR user plane and control plane protocol terminations towards a UE and is connected to the 5G core network (5GC) via an NG interface. Alternatively, the base station 100 may be an en-gNB. The en-gNB is a node that provides NR user plane and control plane protocol terminations towards a UE and operates as a secondary node in E-UTRA-NR dual connectivity (EN-DC).

The base station 100 may include a plurality of nodes. The plurality of nodes may include a first node that hosts higher layers included in the protocol stack and a second node that hosts lower layers included in the protocol stack. The higher layers may include the RRC, SDAP, and PDCP, while the lower layers may include the RLC, MAC, and PHY layers. The first node may be a central unit (CU) and the second node may be a distributed unit (DU). Note that the plurality of nodes may include a third node that performs lower level processing of the PHY layer and the second node may perform higher level processing of the PHY layer. The third node may be a radio unit (RU).

Alternatively, the base station 100 may be one of the plurality of nodes and may be connected to another unit of the plurality of nodes.

The base station 100 may be an integrated access and backhaul (IAB) donor or an IAB node.

### (2) UE 200

The UE 200 communicates with a base station. For example, the UE 200 communicates with the base station 100 in a case where the UE 200 is located within the coverage area 10 of the base station 100.

For example, the UE 200 communicates with a base station (for example, base station 100) using the protocol stack.

In addition, the UE 200 transmits an SR and a BSR as described in <1. Related Technology> to the base station. In addition, the UE 200 may be an apparatus corresponding to an XR service (in other words, XR scenario).

### <3. Configuration of Base Station>

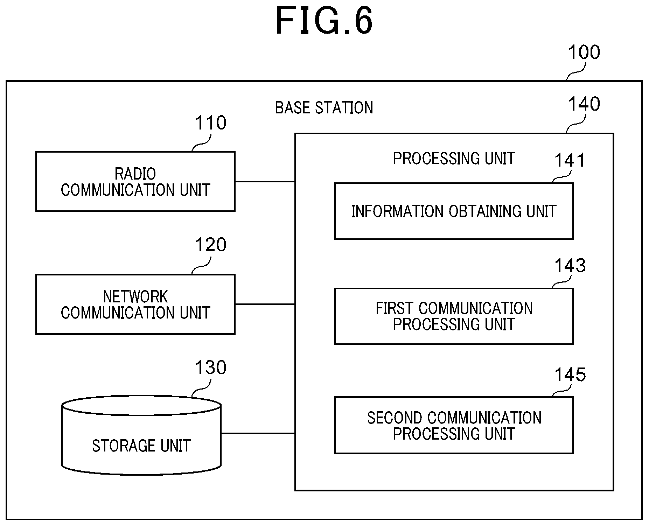

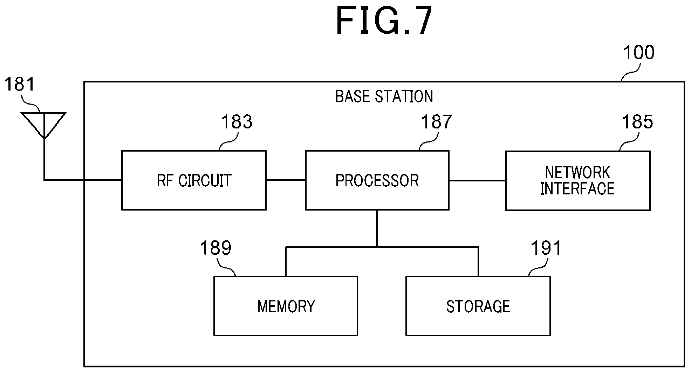

An example of a configuration of the base station 100 according to the embodiment of the present disclosure will be described with reference to Figs. 6 and 7.

### (1) Functional Configuration

First, an example of a functional configuration of the base station 100 according to embodiments of the present disclosure will be described with reference to FIG. 3. Referring to FIG. 3, the base station 100 includes a radio communication unit 110, a network communication unit 120, a storage unit 130, and a processing unit 140.

The radio communication unit 110 wirelessly transmits and receives signals. For example, the radio communication unit 110 receives signals from and transmits signals to a UE.

The network communication unit 120 receives signals from and transmits signals to the network.

The storage unit 130 stores various kinds of information for the base station 100.

The processing unit 140 provides various functions of the base station 100. The processing unit 140 includes an information obtaining unit 141, a first communication processing unit 143, and a second communication processing unit 145. Note that the processing unit 140 may further include another component other than these components. That is, the processing unit 140 may also perform an operation other than operations of these components. Specific operations of the information obtaining unit 141, the first communication processing unit 143, and the second communication processing unit 145 will be described in detail below.

For example, the processing unit 140 (first communication processing unit 143) communicates with a UE (e.g., UE 200) through the radio communication unit 110. For example, the processing unit 140 (second communication processing unit 145) communicates with another node (e.g., a network node in the core network or another base station) through the network communication unit 120.

### (2) Hardware Configuration

Next, an example of the hardware configuration of the base station 100 according to the embodiment of the present disclosure will be described with reference to Fig. 7. Referring to Fig. 7, the base station 100 includes an antenna 181, a radio frequency (RF) circuit 183, a network interface 185, a processor 187, a memory 189, and a storage 191.

The antenna 181 converts signals into radio waves and emits the radio waves into the air. In addition, the antenna 181 receives radio waves from the air and converts the radio waves into signals. The antenna 181 may include a transmitting antenna and a receiving antenna or may be a single antenna for transmission and reception. The antenna 181 may be a directional antenna and may include a plurality of antenna elements.

The RF circuit 183 performs analog processing on signals that are transmitted and received through the antenna 181. The RF circuit 183 may include a high-frequency filter, an amplifier, a modulator, a lowpass filter, and the like.

The network interface 185 is, for example, a network adaptor, and transmits a signal to a network and receives a signal from the network.

The processor 187 performs digital processing on signals that are transmitted and received via the antenna 181 and the RF circuit 183. The digital processing includes processing of the RAN protocol stack. The processor 187 also performs processing on signals that are transmitted and received via the network interface 185. The processor 187 may include a plurality of processors or may be a single processor. The plurality of processors may include a baseband processor that performs the digital processing and one or more processors that perform other processing.

The memory 189 stores a program to be executed by the processor 187, a parameter associated with the program, and other various kinds of information. The memory 189 may include at least one of a read only memory (ROM), an erasable programmable read only memory (EPROM), an electrically erasable programmable read only memory (EEPROM), a random access memory (RAM), and a flash memory. All or part of the memory 189 may be included in the processor 187.

The storage 191 stores various kinds of information. The storage 191 may include at least one of a solid state drive (SSD) and a hard disc drive (HDD).

The radio communication unit 110 may be implemented by the antenna 181 and the RF circuit 183. The network communication unit 120 may be implemented by the network interface 185. The storage unit 130 may be implemented by the storage 191. The processing unit 140 may be implemented by the processor 187 and the memory 189

Part or all of the processing unit 140 may be virtualized. In other words, part or all of the processing unit 140 may be implemented as a virtual machine. In this case, part or all of the processing unit 140 may operate as a virtual machine on a physical machine (i.e., hardware) including a processor, a memory, and the like and a hypervisor.

Given the hardware configuration described above, the base station 100 may include a memory (that is, memory 189) that stores a program and one or more processors (that is, processor 187) capable of executing the program and the one or more processors may perform operations of the processing unit 140 by executing the program. The program may be a program for causing the processors to execute the operations of the processing unit 140.

### <4. Configuration of User Equipment>

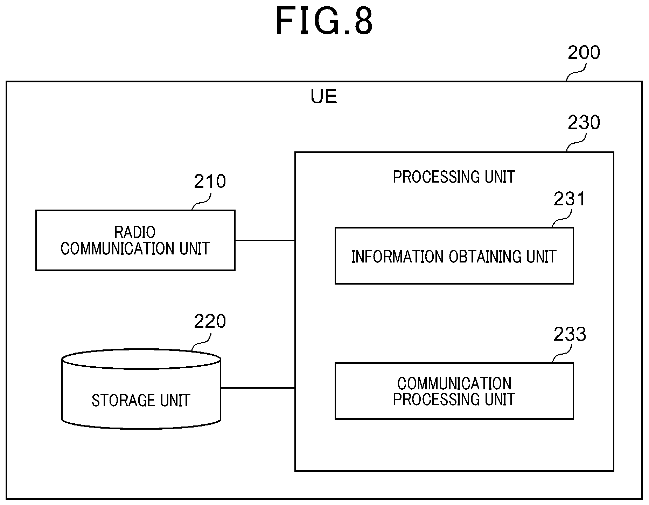

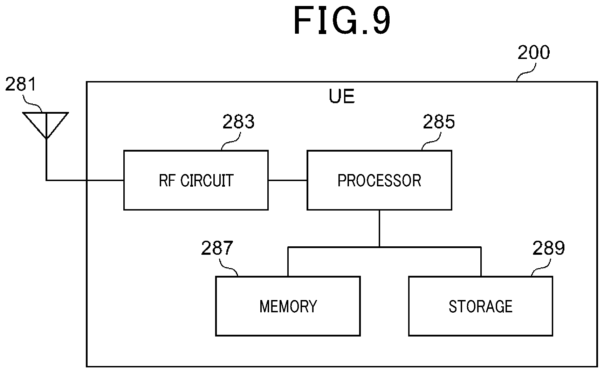

An example of the configuration of the UE 200 according to the embodiment of the present disclosure will be described with reference to Figs. 8 and 9.

### (1) Functional Configuration

First, an example of the functional configuration of the UE 200 according to the embodiment of the present disclosure will be described with reference to Fig. 8. Referring to Fig. 8, the UE 200 includes a radio communication unit 210, a storage unit 220, and a processing unit 230.

The radio communication unit 210 wirelessly transmits and receives signals. For example, the radio communication unit 210 receives a signal from a base station and transmits a signal to the base station. For example, the radio communication unit 210 receives a signal from another UE and transmits a signal to the other UE.

The storage unit 220 stores various kinds of information for the UE 200.

The processing unit 230 provides various functions of the UE 200. The processing unit 230 includes an information obtaining unit 231 and a communication processing unit 233. Note that the processing unit 230 may further include another component other than these components. That is, the processing unit 230 may also perform an operation other than operations of these components. Specific operations of the information obtaining unit 231 and the communication processing unit 233 will be described in detail below.

For example, the processing unit 230 (communication processing unit 233) communicates with a base station (e.g., base station 100) or another UE through the radio communication unit 210.

### (2) Hardware Configuration

Next, an example of the hardware configuration of the UE 200 according to the embodiment of the present disclosure will be described with reference to Fig. 9. Referring to Fig. 9, the UE 200 includes an antenna 281, an RF circuit 283, a processor 285, a memory 287, and a storage 289.

The antenna 281 converts signals into radio waves and emits the radio waves into the air. In addition, the antenna 281 receives radio waves from the air and converts the radio waves into signals. The antenna 281 may include a transmitting antenna and a receiving antenna or may be a single antenna for transmission and reception. The antenna 281 may be a directional antenna and may include a plurality of antenna elements.

The RF circuit 283 performs analog processing on signals that are transmitted and received via the antenna 281. The RF circuit 283 may include a high-frequency filter, an amplifier, a modulator, a lowpass filter, and the like.

The processor 285 performs digital processing on signals that are transmitted and received via the antenna 281 and the RF circuit 283. The digital processing includes processing of the RAN protocol stack. The processor 285 may include a plurality of processors or may be a single processor. The plurality of processors may include a baseband processor that performs the digital processing and one or more processors that perform other processing.

The memory 287 stores a program to be executed by the processor 285, a parameter associated with the program, and other various kinds of information. The memory 287 may include at least one of a ROM, an EPROM, an EEPROM, a RAM, and a flash memory. All or part of the memory 287 may be included in the processor 285.

The storage 289 stores various kinds of information. The storage 289 may include at least one of an SSD and an HDD.

The radio communication unit 210 may be implemented by the antenna 281 and the RF circuit 283. The storage unit 220 may be implemented by the storage 289. The processing unit 230 may be implemented by the processor 285 and the memory 287.

The processing unit 230 may be implemented by a system on a chip (SoC) including the processor 285 and the memory 287. The SoC may include the RF circuit 283 and the radio communication unit 210 may also be implemented by the SoC.

Given the hardware configuration described above, the UE 200 may include a memory (that is, memory 287) that stores a program and one or more processors (that is, processor 285) capable of executing the program and the one or more processors may perform operations of the processing unit 230 by executing the program. The program may be a program for causing the processors to execute the operations of the processing unit 230.

### <5. First Embodiment>

In the embodiment of the present disclosure, configuration information for determining whether a BSR (also referred to as an enhanced-BSR below) including a first field and a modified second field is used is transmitted from a base station to a UE. In a first embodiment of the present disclosure, configuration information for determining whether an enhanced-BSR (also referred to as a buffer size (BS) extended BSR below) including an extended buffer size field serving as a modified second field is used is transmitted from the base station 100 to the UE 200.

### <5-1. Operation Examples>

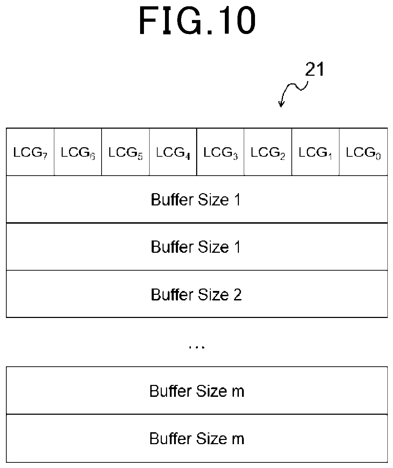

Examples of operations of the base station 100 and the UE 200 according to the first embodiment of the present disclosure will be described with reference to Figs. 10 to 13.

### (1) Format of BS Extended BSR

The BS extended BSR according to the present embodiment includes a first field and a modified second field, and the first field may indicate a logical channel group (LCG) for which the buffer status is reported. In addition, a second field corresponds to the logical channel group and is associated with the uplink data amount. In addition, the modified second field may be a field (also referred to as an extended second field below) obtained by increasing the second field in size. In other words, the extended second field may be larger in size than the second field that has not yet been extended (i.e., the extended second field may be greater in data length or have a larger number of bits). For example, the UE 200 may calculate a data amount (volume) and determine the uplink data amount available to a logical channel. In addition, as described below, the UE 200 may determine a Buffer Size level on the basis of the uplink data amount and set an index corresponding to the determined Buffer Size level in the second field.

Specifically, the extended second field is a Buffer Size field (also referred to as an extended Buffer Size field below) indicating information used for indicating the total data amount of the logical channels of the corresponding logical channel group. An extended Buffer Size field of a BS extended BSR is longer than a Buffer Size field (also referred to as a legacy Buffer Size field below) of a legacy BSR. The legacy BSR is a BSR from which the enhanced-BSR is modified. For example, the legacy BSR may be a BSR that is classified into the Regular BSR, the Periodic BSR, or the Padding BSR described above. That is, the legacy BSR may be a Short BSR, a Long BSR, an Extended Short BSR, an Extended Long BSR, a Short Truncated BSR, a Long Truncated BSR, an Extended Short Truncated BSR, an Extended Long Truncated BSR, a Pre-emptive BSR, or an Extended Pre-emptive BSR. In addition, for example, a code point (or an index) corresponding to each of the legacy BSRs may be defined as the value of the LCID/eLCID for a UL-SCH. That is, a code point (or an index) corresponding to each of a Short BSR, a Long BSR, an Extended Short BSR, an Extended Long BSR, a Short Truncated BSR, a Long Truncated BSR, an Extended Short Truncated BSR, an Extended Long Truncated BSR, a Pre-emptive BSR, and/or an Extended Pre-emptive BSR may be defined as the value of the LCID/eLCID for the UL-SCH. For example, the UE 200 may transmit, on the basis of a configuration from the base station 100 and/or a condition, any of the legacy BSRs identified on the basis of the value of the LCID/eLCID.

The format of the BS extended BSR according to the present embodiment will be described in detail with reference to Fig. 10. Fig. 10 illustrates an example of the MAC CE format of a BS extended BSR obtained by extending a Buffer Size field of a legacy Long BSR. Note that the BS extended BSR is not limited to the legacy Long BSR and may be a BSR obtained by extending a Buffer Size field of a legacy BSR having another format.

For example, as illustrated in a format 21 of Fig. 10, the BS extended BSR includes an LCGi field as a first field and an extended Buffer Size j field as an extended second field. The LCGi field indicates the presence of the extended Buffer Size j field for an LCGi.

The extended Buffer Size j field is used for identifying the total amount of data available to all of the logical channels belonging to the corresponding to LCGi. One certain extended Buffer Size j field has, for example, a 16-bit (or 8-bit) size and this is longer than the 8-bit (or 5-bit) size of a legacy Buffer Size j field. The legacy Buffer Size j field is a Buffer Size field from which the extended Buffer Size j field is modified. Note that the size of the extended Buffer Size j field is not limited to this and may be any other size (e.g., 24-bit size or the like) longer than that of the legacy Buffer Size j field. In addition, the extended Buffer Size j field may have a different size depending on the corresponding LCGi. Here, eight bits is also referred to as one octet. That is, 16 bits is also referred to as two octets.

The extended Buffer Size j field indicates an index corresponding to a Buffer Size (e.g., a Buffer Size level, a Buffer Size value, or a Buffer Size range) in an unillustrated table, for example, for a 16-bit Buffer Size field. Note that the extended Buffer Size j field is included in an ascending order depending on an LCGi (e.g., depending on the value of i of the LCGi).

The BS extended BSR is distinguished from a BSR having another format. For example, the LCID/eLCID indicating the BS extended BSR is defined. For example, a code point (or an index) corresponding to the BS extended BSR may be defined as the value of the LCID/eLCID for a UL-SCH. This allows the BS extended BSR to be transmitted as a MAC CE. Note that, the MAC CE of the BS extended BSR may be included and transmitted in a MAC protocol data unit (PDU). For example, the MAC PDU may include one or more MAC subPDUs and each of the MAC subPDUs may include a MAC subheader and a MAC CE. Here, the MAC subheader may include an LCID/eLCID. That is, the MAC subheader including the LCID/eLCID indicating the BS extended BSR and the MAC CE of the BS extended BSR are included in the MAC subPDU, and the MAC PDU including the MAC subPDU is transmitted.

### (2) BS Extended BSR Configuration Information

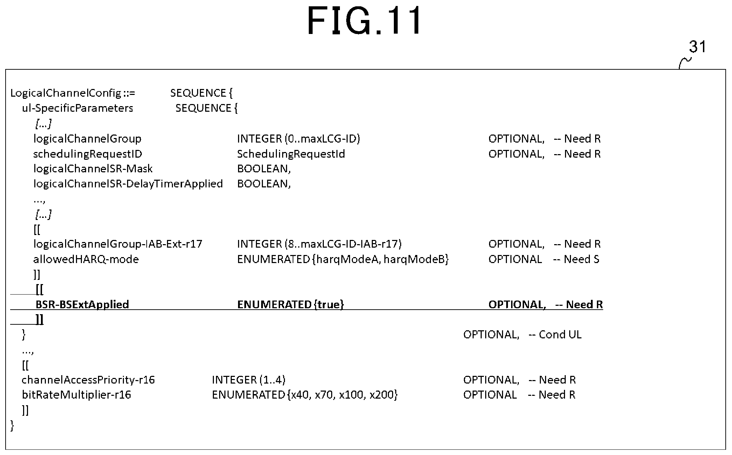

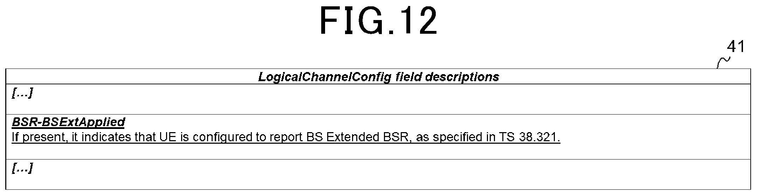

Configuration information (also referred to as BS extended BSR configuration information below) for determining whether a BS extended BSR according to the present embodiment is used is defined. The BS extended BSR configuration information is included in logical channel configuration information. This causes the BS extended BSR to be configured for each of the logical channels. The BS extended BSR configuration information will be described in detail with reference to Figs. 11 and 12.

Specifically, the BS extended BSR configuration information is included in LogicalChannelConfig. That is, the logical channel configuration information may correspond to LogicalChannelConfig. For example, LogicalChannelConfig may be used for configuring a parameter of the logical channel. In addition, LogicalChannelConfig may include the parameter associated with the BSR. For example, one or more parameters included in LogicalChannelConfig may be used for identifying one logical channel. For example, Logical Channel Config may include a parameter (logicalChannelGroup) indicating the index of the logical channel group to which the one logical channel belongs. That is, the logical channel group to which the one logical channel belongs may be identified on the basis of the parameter indicating the index of the logical channel group. For example, the base station 100 may transmit, to the UE 200, LogicalChannelConfig including one or more parameters for the one logical channel. Here, the base station 200 may transmit an RRC message including Logical Channel Config to the UE 200. In addition, the UE 200 may identify the one logical channel on the basis of the one or more parameters included in LogicalChannelConfig. For example, the UE 200 may identify, on the basis of the parameter indicating the index of the logical channel group included in LogicalChannelConfig, the logical channel group to which the one logical channel belongs. Here, as described above, the UE 200 may transmit a BSR for the logical channel group to which one or more logical channels belong. As illustrated in information 31 of Fig. 11, BSR-BSExtApplied serving as BS extended BSR configuration information may be included as a parameter of LogicalChannelConfig as a specific example of the above.

In addition, the BS extended BSR configuration information is a flag. For example, as illustrated in a table 41 of Fig. 12, in a case where BSR-BSExtApplied is present, BSR-BSExtApplied indicates that the UE 200 is configured to report a BS extended BSR. In contrast, in a case where BSR-BSExtApplied is not present, it is indicated that the UE 200 is not configured to report a BS extended BSR, that is, the UE 200 is configured to report a legacy BSR. Note that the BS extended BSR configuration information is not limited to a flag indicating, by the presence or absence thereof, whether a BS extended BSR is used and may be a flag indicating, by a value, whether a BS extended BSR is used. For example, in the case of a value of 0, the BS extended BSR configuration information may indicate that a legacy BSR is used. In the case of a value of 1, the BS extended BSR configuration information may indicate that a BS extended BSR is used. Here, the case of the presence of BSR-BSExtApplied may correspond to the case of the presence of BSR-BSExtApplied in LogicalChannelConfig. That is, the case of the presence of BSR-BSExtApplied may correspond to a case where BSR-BSExtApplied is included in LogicalChannelConfig. In addition, the case of the absence of BSR-BSExtApplied may correspond to a case where BSR-BSExtApplied is not present in LogicalChannelConfig. That is, the case of the absence of BSR-BSExtApplied may correspond to a case where BSR-BSExtApplied is not included in LogicalChannelConfig. The following chiefly describes the case of the presence of B SR-B SExtApplied or the case of the absence of B SR-B SExtApplied, but the case of the presence of BSR-BSExtApplied may be replaced with a case where the BS extended BSR configuration information has a value of 1. In addition, the case of the absence of BSR-BSExtApplied may be replaced with a case where the BS extended BSR configuration information has a value of 0. In addition, the case of the presence of BSR-BSExtApplied will also be described as a case where BSR-BSExtApplied is configured. In addition, the case of the absence of BSR-BSExtApplied will also be described as a case where BSR-BSExtApplied is not configured.

### (3) Message Including Configuration Information

The configuration information for determining whether a BS extended BSR according to the present embodiment is used is included and transmitted in a message. The message may be an RRC message.

For example, the BS extended BSR configuration information is transmitted in an RRC message including LogicalChannelConfig. The RRC message may be, for example, RRCReconfiguration, RRCResume, or RRCSetup. In addition, an RRC message different from the RRC message described above may be used. Here, the base station 100 may transmit LogicalChannelConfig including the BS extended BSR configuration information to the UE 200. For example, the base station 100 may transmit an RRC message including LogicalChannelConfig to the UE 200. In addition, the UE 200 may determine an operation associated with a BSR on the basis of the BS extended BSR configuration information. For example, the UE 200 may identify the logical channel group to which a logical channel belongs on the basis of the BS extended BSR configuration information, and transmit a BSR for the logical channel group.

### (4) Operation of UE 200 Based on Configuration Information

The UE 200 according to the present embodiment receives configuration information for determining whether a BS extended BSR according to the present embodiment is used. The UE 200 obtains, from a message including the received configuration information, the configuration information. The UE 200 determines a BSR to be used on the basis of the obtained configuration information.

Specifically, the UE 200 determines, on the basis of the BS extended BSR configuration information obtained from the received RRC message, whether a BS extended BSR is used. For example, the UE 200 determines, on the basis of the BS extended BSR configuration information included in the logical channel configuration information, whether a BS extended BSR is used for each of the logical channels. In a case where the buffer status is reported for the LCG to which a logical channel for which the use of a BS extended BSR is determined belongs, the UE 200 uses the BS extended BSR.

For example, in a case where LogicalChannelConfig included in the received RRC message includes BSR-BSExtApplied as illustrated in Fig. 11, the UE 200 uses the BS extended BSR as a BSR for the LCG including a logical channel for which LogicalChannelConfig is configured.

### (5) Flow of Processing

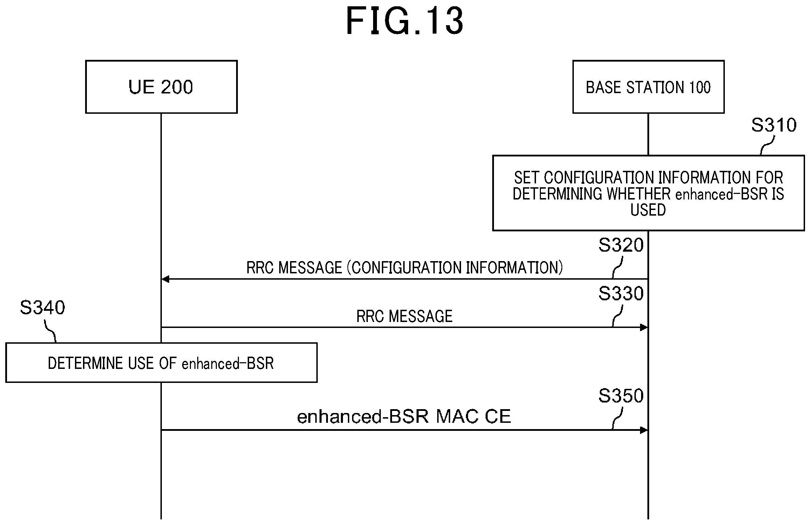

An example of processing according to the present embodiment will be described with reference to Fig. 13.

The base station 100 sets, in an RRC message, configuration information (i.e., BS extended BSR configuration information in the present embodiment) for determining whether an enhanced-BSR is used (step S310). For example, the base station 100 obtains BSR-BSExtApplied as illustrated in Fig. 11 and sets BSR-BSExtApplied in Logical Channel Config.

The base station 100 transmits the RRC message including the BS extended BSR configuration information to the UE 200 (step S320). For example, the base station 100 transmits, to the UE 200, an RRC message (e.g., RRCReconfiguration, RRCResume, or RRCSetup) including LogicalChannelConfig in which BSR-BSExtApplied is set.

When receiving the RRC message including the BS extended BSR configuration information, the UE 200 transmits, to the base station 100, an RRC message serving as a response to the RRC message (step S330). For example, when receiving an RRC message including LogicalChannelConfig in which BSR-BSExtApplied is set, the UE 200 transmits, to the base station 100, an RRC message (e.g., RRCReconfigurationComplete, RRCResumeComplete, or RRCSetupComplete) serving as a response.

The UE 200 determines the use of an enhanced-BSR on the basis of the received configuration information (step S340). For example, when a BSR is triggered, the UE 200 uses a BS extended BSR in a case where BSR-BSExtApplied is included in LogicalChannelConfig for any of the logical channels belonging to the LCG for which the buffer status is reported in the BSR. Otherwise, the UE 200 uses a legacy BSR, that is, a BSR for which a Buffer Size field is not extended. That is, the UE 200 may report a BS extended BSR (i.e., enhanced-BSR MAC CE) on the basis that BSR-BSExtApplied is configured for at least one of the logical channels belonging to an LCG for a BSR to be reported. In addition, the UE 200 may report a legacy BSR on the basis that BSR-BSExtApplied is not configured for any of the logical channels belonging to an LCG for a BSR to be reported. That is, the UE 200 may determine whether a BS extended BSR (e.g., enhanced-BSR MAC CE) is reported on the basis of whether BSR-BSExtApplied is configured (e.g., whether BSR-BSExtApplied is configured by a higher layer). In addition, the UE 200 may determine whether a BS extended BSR (e.g., enhanced-BSR MAC CE) is transmitted on the basis of whether Logical Channel Config includes BSR-BSExtApplied.

Here, the format of the BS extended BSR may be used for a Regular BSR, a Periodic BSR, and/or a Padding BSR. For example, the UE 200 may report a BS extended BSR on the basis that BSR-BSExtApplied is configured for a Regular BSR, a Periodic BSR, and/or a Padding BSR. For example, the UE 200 may report a BS extended BSR on the basis that BSR-BSExtApplied is configured for a Regular BSR, a Periodic BSR, and/or Padding BSR and there are two or more LCGs each having data available when a MAC PDU including the BSR is built. In addition, the UE 200 may report a BS extended BSR on the basis that BSR-BSExtApplied is configured for a Regular BSR, a Periodic BSR, and/or a Padding BSR and there are one or more LCGs each having data available when a MAC PDU including the BSR is built. In addition, the UE 200 may report a BS extended BSR on the basis that BSR-BSExtApplied is configured for a Regular BSR, a Periodic BSR, and/or a Padding BSR, there are two or more (or one or more) LCGs each having data available when a MAC PDU including the BSR is built, and the ID of the LCG that is the largest of the configured LCGs is greater than 7. In addition, the UE 200 may report a BS extended BSR on the basis that BSR-BSExtApplied is configured for a Regular BSR, a Periodic BSR, and/or a Padding BSR, there are two or more (or one or more) LCGs each having data available when a MAC PDU including the BSR is built, and the ID of the LCG that is the largest of the configured LCGs is greater than 256. Here, the UE 200 may report BS extended BSRs for all of the LCGs each having data available for transmission.

In addition, the UE 200 may report a legacy BSR on the basis that BSR-BSExtApplied is not configured for a Regular BSR, a Periodic BSR, and/or a Padding BSR. In addition, the UE 200 may report a legacy BSR on the basis that BSR-BSExtApplied is configured for a Regular BSR, a Periodic BSR, and/or a Padding BSR and there is one LCG having data available when a MAC PDU including the BSR is built. In addition, the UE 200 may report a legacy BSR on the basis that BSR-BSExtApplied is configured for a Regular BSR, a Periodic BSR, and/or a Padding BSR, there are two or more LCGs each having data available when a MAC PDU including the BSR is built, and the ID of the LCG that is the largest of the configured LCGs is 7 or less than 7. In addition, the UE 200 may report a legacy BSR on the basis that BSR-BSExtApplied is configured for a Regular BSR, a Periodic BSR, and/or a Padding BSR, there are two or more LCGs each having data available when a MAC PDU including the BSR is built, and the ID of the LCG that is the largest of the configured LCGs is 256 or less than 256. Here, the UE 200 may report legacy BSRs for all of the LCGs each having data available for transmission. As described above, for example, the legacy BSR may be a Short BSR, a Long BSR, an Extended Short BSR, an Extended Long BSR, a Short Truncated BSR, a Long Truncated BSR, an Extended Short Truncated BSR, an Extended Long Truncated BSR, a Pre-emptive BSR, or an Extended Pre-emptive BSR.

Here, the maximum number of LCGs configured by using logicalChannelGroup may be 8 (e.g., the eight IDs of LCGs from 0 to 7). That is, the IDs of LCGs configured by using logical Channel Group may each have any of values of 0 to 7. In addition, the maximum number of LCGs configured by using logicalChannelGroup-IAB-Ext-r17 may be 256 (e.g., the 256 IDs of LCGs from 0 to 255). The UE 200 may report a legacy BSR for the LCG corresponding to the value of an ID configurable by using logicalChannelGroup and/or logicalChannelGroup-IAB-Ext-r17.

In addition, the UE 200 may report a BS extended BSR on the basis that BSR-BSExtApplied is configured for a Padding BSR and the number of padding bits is greater than the size of a legacy BSR (and/or the subheader of the legacy BSR). In addition, the UE 200 may report a legacy BSR on the basis that BSR-BSExtApplied is configured for a Padding BSR and the number of padding bits is less than the size of a legacy BSR (and/or the subheader of the legacy BSR). Here, the UE 200 may report BS extended BSRs or legacy BSRs for all of the LCGs each having data available for transmission. In addition, the UE 200 may report a BS extended BSR or a legacy BSR for the LCG to which a logical channel out of logical channels each having data available for transmission belongs, the logical channel being determined on the basis of prioritization.

The UE 200 transmits an enhanced-BSR MAC CE to the base station 100 (step S350). For example, the UE 200 sets an index corresponding to the Buffer Size of UL data in the extended Buffer Size field corresponding to an LCG as illustrated in Fig. 10 and generates a BS extended BSR MAC CE. The UE 200 transmits the generated BS extended BSR MAC CE to the base station 100. For example, the UE 200 may apply a logical channel prioritization (LCP) procedure and transmit an enhanced-BSR MAC CE. Here, the logical channel prioritization procedure may be a procedure applied when initial transmission is performed. For example, in the logical channel prioritization procedure, logical channels (e.g., the MAC CEs of the logical channels) may be prioritized in the following order. The following first lists logical channels that are higher in priority.
- MAC CE for C-RNTI or data from UL-CCCH
- MAC CE for (Extended) BSR, with exception of BSR included for padding
- MAC CE for (Extended) Pre-emptive BSR
- data from any Logical Channel, except data from UL-CCCH
- MAC CE for BSR included for padding
For example, an enhanced-B SR MAC CE may be higher in priority than MAC CE for (Extended) BSR, with exception of BSR included for padding. For example, the enhanced-B SR MAC CE may be defined to be lower in priority than MAC CE for C-RNTI or data from UL-CCCH and higher in priority than MAC CE for (Extended) BSR. In addition, the enhanced-BSR MAC CE may be higher in priority than MAC CE for (Extended) Pre-emptive BSR. For example, the enhanced-BSR MAC CE may be defined to be lower in priority than MAC CE for (Extended) BSR, with exception of BSR included for padding and higher in priority than MAC CE for (Extended) Pre-emptive BSR. In addition, the enhanced-BSR MAC CE may be higher in priority than data from any Logical Channel, except data from UL-CCCH. For example, the enhanced-BSR MAC CE may be defined to be lower in priority than MAC CE for (Extended) Pre-emptive BSR and higher in priority than data from any Logical Channel, except data from UL-CCCH. In addition, the enhanced-BSR MAC CE may be higher in priority than MAC CE for BSR included for padding. For example, the enhanced-BSR MAC CE may be defined to be lower in priority than data from any Logical Channel, except data from UL-CCCH and higher in priority than MAC CE for BSR included for padding. For example, the UE 200 may report an enhanced-BSR MAC CE in accordance with priority in the logical channel prioritization (LCP) procedure.

In this way, according to the embodiment of the present disclosure, a message including configuration information for determining whether a BSR including at least one of first fields and at least one of modified second fields is used is transmitted and received, the BSR is used for providing information on an UL data amount, the at least one of the first fields indicates at least one of LCGs for which the buffer status is reported, and the at least one of the modified second fields corresponds to the at least one of the LCGs and is associated with the UL data amount.

This makes it possible to increase an information amount associated with the UL data amount in a BSR in comparison with a BSR (i.e., legacy BSR) including a first field and a second field. It is thus possible to increase the efficiency of scheduling UL data by using a BSR. In particular, it is possible to embody a method for scheduling XR data by using an XR-specific BSR and increase the efficiency of scheduling the XR data by using the XR-specific BSR.

In addition, the configuration information is included in logical channel configuration information. This makes it possible to configure the configuration information for each of the logical channels. In particular, a logical channel may be associated with XR traffic and it is thus possible to substantially configure the configuration information for the XR traffic.

In addition, the configuration information is a flag. This makes it possible to handle the configuration information with a smaller data amount. It is therefore possible to restrain communication resources from increasing for the signaling of the configuration information.

In addition, the at least one of the modified second fields is the second field increased in size. This makes it possible to increase an information amount associated with a UL data amount as in the manner of the second fields. For example, it is possible to extend the range or the granularity of a UL data amount that can be treated. That is, it is possible to raise the upper limit of the UL data amount or subdivide the granularity.

In addition, the at least one of the modified second fields is a Buffer Size field indicating information used for indicating the total data amount of the respective logical channels of the at least corresponding one of the LCGs. This makes it possible to extend the range or the granularity of a Buffer Size that can be treated in a Buffer Size field. It is therefore possible to reduce a quantization error for UL data (e.g., XR data) having a large volume and varying greatly.

### <5-2. Modification Examples>

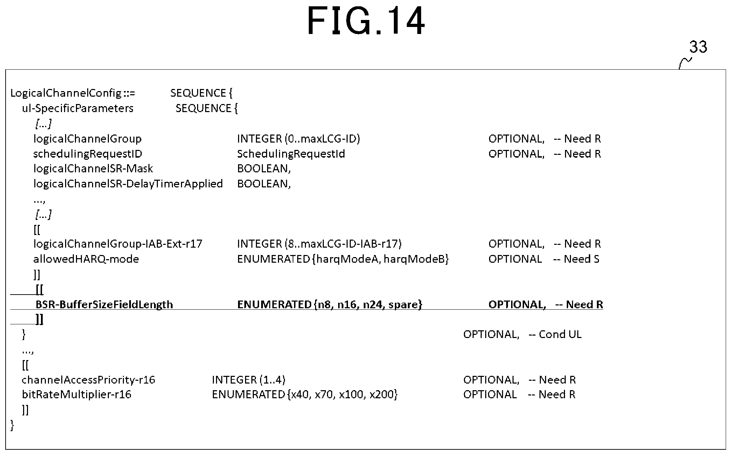

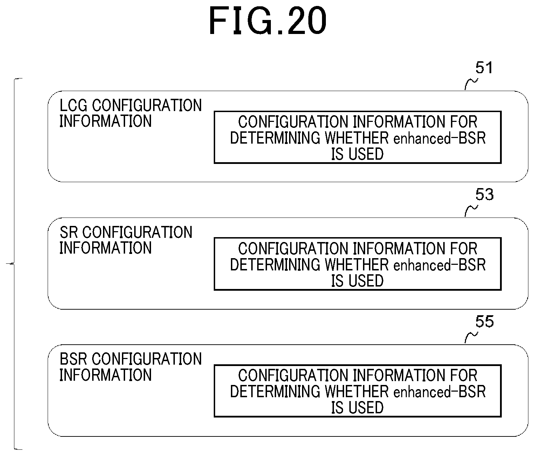

First to fourth modification examples according to the first embodiment of the present disclosure will be described with reference to Figs. 14 and 20. Note that two or more of these modification examples may be combined.

(1) First Modification Example: Another Example of BS Extended BSR Configuration Information

In the embodiment of the present disclosure described above, the BS extended BSR configuration information is a flag. However, the BS extended BSR configuration information according to the embodiment of the present disclosure is not limited to this example.

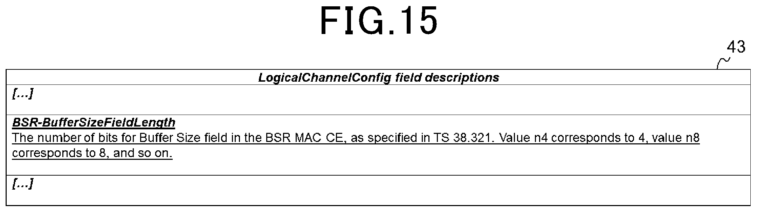

As a first modification example 1 of the present embodiment, the BS extended BSR configuration information may be information on the length of at least one of modified second fields. Specifically, the BS extended BSR configuration information is information indicating the length of a second field increased in size. The BS extended BSR configuration information according to the present modification example will be described in detail with reference to Figs. 14 and 15.

For example, as illustrated in information 33 of Fig. 14, BSR-BufferSizeFieldLength serving as BS extended BSR configuration information is included as a parameter of LogicalChannelConfig. For example, as illustrated in table 43 of Fig. 15, BSR-BufferSizeFieldLength indicates the length of a Buffer Size field. BSR-BufferSizeFieldLength indicates, by the presence or absence thereof, whether a BS extended BSR is used. For example, in a case where B SR-BufferSizeFieldLength is present, B SR-BufferSizeFieldLength indicates that the UE 200 is configured to report a BS extended BSR and indicates the length of an extended Buffer Size field in the BS extended BSR. In contrast, in a case where BSR-BufferSizeFieldLength is not present, it is indicated that the UE 200 is not configured to report a BS extended BSR, that is, the UE 200 is configured to report a legacy BSR.

In addition, BSR-BufferSizeFieldLength may indicate information for indicating the length of a Buffer Size field. For example, BSR-BufferSizeFieldLength indicates an index corresponding to the length (e.g., the value or the range of the length) of a Buffer Size field.

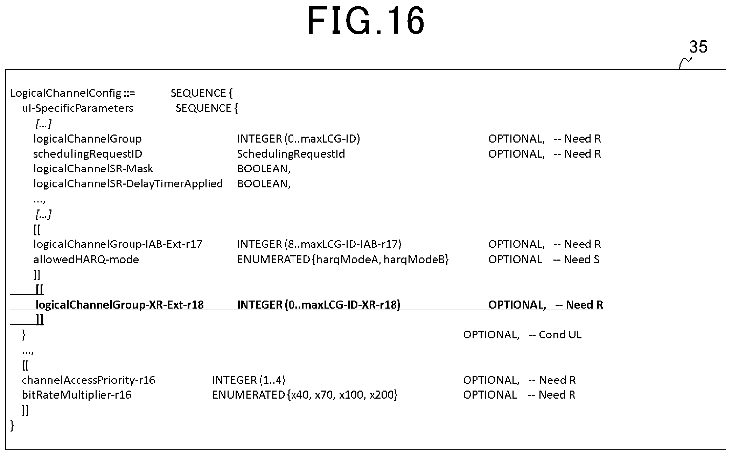

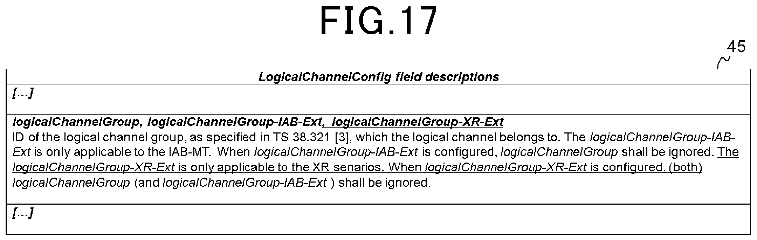

In addition, as a first modification example 2 of the present embodiment, the BS extended BSR configuration information may be information for identifying an LCG for which a BS extended BSR is used. That is, the BS extended BSR configuration information may indicate the ID of an LCG. For example, the BS extended BSR configuration information may indicate the ID of the LCG to which a logical channel belongs. For example, the UE 200 may determine the ID of the LCG to which the logical channel belongs on the basis of the ID of the LCG indicated by the BS extended BSR configuration information. The BS extended BSR configuration information according to the present modification example will be described in detail with reference to Figs. 16 and 17.

For example, as illustrated in information 35 of Fig. 16, logicalChannelGroup-XR-Ext-r18 serving as BS extended BSR configuration information is included as a parameter of LogicalChannelConfig. For example, as in a table 45 of Fig. 17, logicalChannelGroup-XR-Ext-r18 may indicate an LCG ID. For example, in a case where logicalChannelGroup-XR-Ext-r18 is present, logicalChannelGroup-XR-Ext-r18 may indicate the LCG ID to which a logical channel belongs. In addition, logicalChannelGroup-XR-Ext-r18 may indicate that the UE 200 is configured to report a BS extended BSR for the LCG ID. In addition, in a case where logical Channel Group-XR-Ext-r18 is not present, it may be indicated that the UE 200 is not configured to report a BS extended BSR, that is, the UE 200 is configured to report a legacy BSR.

Note that, in a case where logicalChannelGroup-XR-Ext-r18 is configured, another configuration of the LCG ID may be ignored. In this case, for example, logical Channel Group and/or logicalChannelGroup-IAB-Ext-r17 as illustrated in Fig. 16 may be ignored. That is, in a case where logicalChannelGroup-XR-Ext-r18 indicating the LCG ID is included in logical channel config, the UE 200 may ignore logicalChannelGroup and/or logicalChannelGroup-IAB-Ext-r17 included in logical channel config. As described above, logical Channel Group and/or logicalChannelGroup-IAB-Ext-r17 indicates the LCG ID. Here, the maximum number of LCGs configured by using logicalChannelGroup-XR-Ext-r18 may be 8 (e.g., the eight IDs of LCGs from 0 to 7 or the eight IDs of LCGs from 8 to 15). That is, the IDs of LCGs configured by using logicalChannelGroup-XR-Ext-r18 may each have any of values of 0 to 7 (or any of values of 8 to 15). For example, the ID of the LCG configured by using logicalChannelGroup-XR-Ext-r18 has any of 8 to 15, thereby making it possible to configure the ID of the LCG different from the ID (i.e., any of 0 to 7) of the LCG configured by using logical Channel Group. In addition, the maximum number of LCGs configured by using logicalChannelGroup-XR-Ext-r18 may be 16 (e.g., the 16 IDs of LCGs from 0 to 15 or the 16 IDs of LCGs from 8 to 23). That is, the IDs of LCGs configured by using logicalChannelGroup-XR-Ext-r18 may each have any of values of 0 to 15 (or any of values of 8 to 23). For example, the 16 IDs of the LCGs are configured by using logicalChannelGroup-XR-Ext-r18, thereby making it possible to configure the IDs of the LCGs more than the number of IDs (i.e., eight) of LCGs configured by using logical Channel Group. In addition, the maximum number of LCGs configured by using logicalChannelGroup-XR-Ext-r18 may be 256 (e.g., the 256 IDs of LCGs from 0 to 255 or the 256 IDs of LCGs from 256 to 511). That is, the IDs of LCGs configured by using logicalChannelGroup-XR-Ext-r18 may each have any of values of 0 to 255 (or any of values of 256 to 511). For example, the ID of the LCG configured by using logicalChannelGroup-XR-Ext-r18 has any of 256 to 511, thereby making it possible to configure the ID of the LCG different from the ID (i.e., any of 0 to 255) of the LCG configured by using logical Channel Group and/or logicalChannelGroup-IAB-Ext-r17. In this way, in a case where logicalChannelGroup-XR-Ext-r18 is configured, the UE 200 ignores another configuration of the LCG ID, thereby making it possible to easily perform an operation associated with a BSR without configuring the LCG ID by using a different parameter.

In addition, as a first modification example 3 of the present embodiment, the BS extended BSR configuration information may be information used for indicating the type of UL data. For example, the type of UL data may be pose/control, video, or the like.

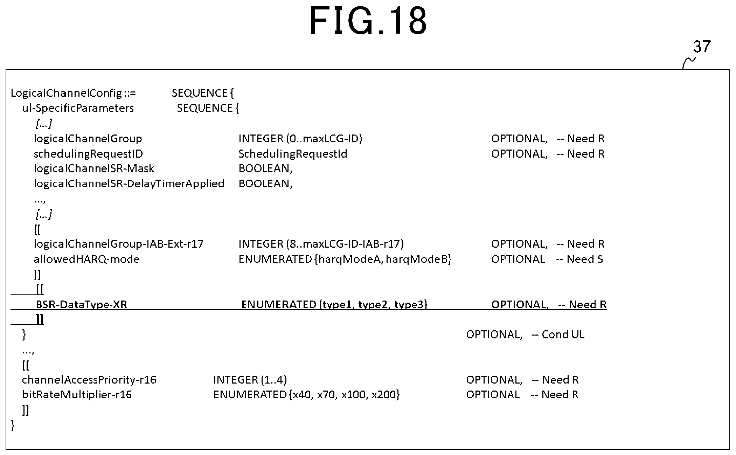

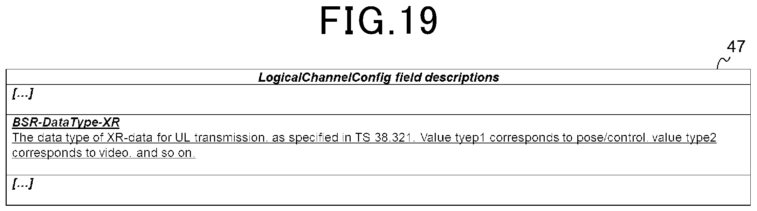

For example, as illustrated in information 37 of Fig. 18, BSR-DataType-XR serving as BS extended BSR configuration information is included as a parameter of Logical Channel Config. For example, as illustrated in a table 47 of Fig. 19, in a case where BSR-DataType-XR is present, BSR-DataType-XR indicates that the UE 200 is configured to report a BS extended BSR for the LCG to which a logical channel belongs, UL data of the indicated type being buffered for the logical channel. In contrast, in a case where BSR-DataType-XR is not present, it is indicated that the UE 200 is not configured to report a BS extended BSR, that is, the UE 200 is configured to report a legacy BSR.

In this way, according to the first modification example 1 of the present embodiment, the BS extended BSR configuration information may be information on the length of at least one of modified second fields. The information on the length of the modified second field can also indicate whether a BS extended BSR is used. It is therefore possible to restrain communication resources from increasing for the signaling of the BS extended BSR configuration information. In addition, the BS extended BSR configuration information indicates the length of a second field increased in size, thereby making it possible to dynamically change the modified second field in size.

In addition, according to the first modification example 2 of the present embodiment, the BS extended BSR configuration information may be information for identifying an LCG for which a BS extended BSR is used. In this way, whether the BS extended BSR is used and the LCG ID are put together in one piece of information, thereby making it possible to identify the LCG ID of a logical channel and concurrently determine whether the BS extended BSR is used.

In addition, according to the first modification example 3 of the present embodiment, the BS extended BSR configuration information may be information used for indicating the type of UL data. This makes it possible to indicate whether a BS extended BSR is used for each type of UL data. It is therefore possible to select an appropriate BSR depending on the type of UL data. In particular, the characteristics of XR data may change greatly depending on the type of data. Therefore, an appropriate BSR is selected depending on the type of XR data, thereby allowing for scheduling suitable for the XR data.

### (2) Second Modification Example: Another Example of Configuration Information Including BS Extended BSR Configuration Information

In the embodiment of the present disclosure described above, the BS extended BSR configuration information is included in logical channel configuration information. However, the BS extended BSR configuration information according to the embodiment of the present disclosure is not limited to this example.

As a second modification example 1 of the present embodiment, the BS extended BSR configuration information may be included in LCG configuration information. This causes the BS extended BSR to be configured for each of the LCGs. The present modification example will be described in detail with reference to Fig. 20.

For example, LCG configuration information 51 is newly added as RRC configuration information and the BS extended BSR configuration information is included in the LCG configuration information 51 as illustrated in Fig. 20. The LCG configuration information 51 is included in an RRC message and transmitted to the UE 200.

In addition, as a second modification example 2 of the present embodiment, the BS extended BSR configuration information may be included in SR configuration information. This causes the BS extended BSR to be configured for each of the SRs.

For example, the BS extended BSR configuration information is included in SchedulingRequestConfig or SchedulingRequestResourceConfig serving as an example of SR configuration information 53 as illustrated in Fig. 20 and associated with schedulingRequestID. Here, schedulingRequestID is also included in the logical channel configuration information. The UE 200 therefore refers to the BS extended BSR configuration information included in the SR configuration information 53 through schedulingRequestID configured for a logical channel belonging to the LCG and determines whether the BS extended BSR is used for the LCG. In other words, the BS extended BSR is considered to be indirectly configured for each of the logical channels through schedulingRequestID.

In addition, as a second modification example 3 of the present embodiment, the BS extended BSR configuration information may be included in BSR configuration information. That is, it is indicated whether the BS extended BSR is used as a BSR of the UE 200. This causes the BS extended BSR to be configured for each of the UEs 200.

For example, the BS extended BSR configuration information is included in BSR-Config as an example of BSR configuration information 55 as illustrated in Fig. 20. The UE 200 refers to the BS extended BSR configuration information included in BSR-Config and determines whether the BS extended BSR is used.

In this way, according to the second modification example 1 of the present embodiment, the BS extended BSR configuration information may be included in LCG configuration information. This allows the BS extended BSR configuration information to be configured for each of the LCGs. A BSR is reported for an LCG and thus makes it possible to reduce processing in comparison with a BS extended BSR configured for a logical channel.

In addition, according to the second modification example 2 of the present embodiment, the BS extended BSR configuration information may be included in SR configuration information. This allows the BS extended BSR configuration information to be configured for each of the SRs. This makes it possible to collectively manage whether a BS extended BSR is used for at least one of the logical channels configured for the same SR.

In addition, according to the second modification example 3 of the present embodiment, the BS extended BSR configuration information may be included in BSR configuration information. This allows the BS extended BSR configuration information to be configured for each of the UEs 200. This makes it possible to collectively switch all of the BSRs used by the UE 200 to BS extended BSRs or other BSRs.

### (3) Third Modification Example: Another Example of Format of BS Extended BSR

In the embodiment of the present disclosure described above, the BS extended BSR includes a first field and a modified second field. However, the BS extended BSR according to the embodiment of the present disclosure is not limited to this example.

As a third modification example of the present embodiment, the BS extended BSR may further includes at least one of second fields. At least one of extended second fields corresponds to an LCG of a plurality of LCGs, the LCG being identified on the basis of the BS extended BSR configuration information and the at least one of the second fields corresponds to an LCG other than the LCG of the plurality of LCGs identified on the basis of the BS extended BSR configuration information. In other words, only the Buffer Size field corresponding to the LCG of the plurality of LCGs, the LCG being identified on the basis of the BS extended BSR configuration information is extended.

Specifically, the BS extended BSR includes a plurality of LCG fields, at least one of extended Buffer Size fields, and at least one of legacy Buffer Size fields. The at least one of the extended Buffer Size fields corresponds to an LCG of the plurality of LCGs, for which the use of a BS extended BSR is determined on the basis of the BS extended BSR configuration information. In addition, the at least one of the legacy Buffer Size fields corresponds to an LCG of the plurality of LCGs other than the LCG described above.

The present modification example will be described in detail with reference to Fig. 10. For example, in the format 21 of Fig. 10, it is assumed that Buffer Size 1 corresponds to LCGO and Buffer Size 2 corresponds to LCG1. In a case where the use of a BS extended BSR for LCGO is determined, the BS extended BSR includes a Buffer Size 1 field longer than a legacy Buffer Size field as an extended Buffer Size field. In addition, in a case where the use of a BS extended BSR for LCG1 is not determined, the BS extended BSR includes a Buffer Size 2 field as a legacy Buffer Size field.

In this way, according to the third modification example of the present embodiment, the BS extended BSR further includes at least one of second fields, at least one of LCGs is a plurality of LCGs, at least one of extended second fields corresponds to an LCG of the plurality of LCGs, the LCG being identified on the basis of the BS extended BSR configuration information, and the at least one of the second fields corresponds to an LCG other than the LCG of the plurality of LCGs identified on the basis of the configuration information. This makes it possible to extend the second field alone that requires extending and restrain the BSR from excessively increasing in size. As a result, it is possible to reduce communication resources wasted for transmitting a BSR.

### (4) Fourth Modification Example: Compliance with Other TSs

In the above-mentioned examples of the embodiment of the present disclosure, the system 1 is a system compliant with the TSs of 5G or NR. However, the system 1 according to the embodiment of the present disclosure is not limited to this example.

In a fourth modification example of the present embodiment, the system 1 may be a system compliant with other TSs in 3GPP. As an example, the system 1 may be a system compliant with the TSs of long term evolution (LTE), LTE advanced (LTE-A), or 4G and the base station 100 may be an evolved node B (eNB). Alternatively, the base station 100 may be an ng-eNB. As another example, the system 1 may be a system compliant with the TSs of 3G and the base station 100 may be a NodeB. As yet another example, the system 1 may be a system compliant with the TSs of the next generation (e.g., 6G).

Alternatively, the system 1 may be a system compliant with TSs of another standardization organization for mobile communications.

### <6. Second Embodiment>

In a second embodiment of the present disclosure, configuration information for determining whether a BSR (also referred to as a delay BSR below) in which a modified second field includes delay information is used is transmitted from the base station 100 to the UE 200. Note that the content which is substantially the same as that of the first embodiment will not be described.

### <6-1. Operation Examples>

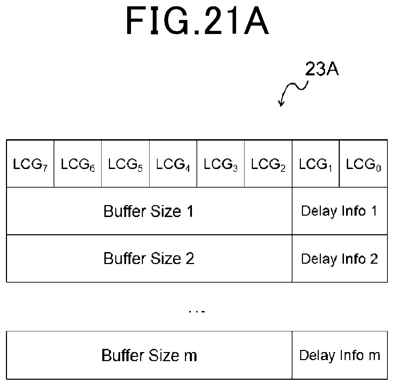

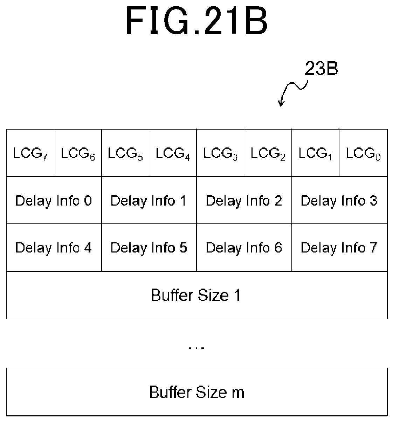

Examples of operations of the base station 100 and the UE 200 according to the second embodiment of the present disclosure will be described with reference to Figs. 21 to 24.

### (1) Format of Delay BSR

A modified second field of a delay BSR according to the present embodiment includes a second field and a third field different from the second field. In other words, the modified second field is obtained by adding the third field to the second field.

Specifically, the modified second field includes a Buffer Size field serving as a second field and a delay information field serving as a third field. The delay information field indicates information used for indicating delay information on an LCG. The delay information indicates information used for indicating the remaining time before the expiry of the permissible delay of data belonging to the corresponding LCG.

The format of the delay BSR according to the present embodiment will be described in detail with reference to Figs. 21A and 21B. Each of Figs. 21A and 21B illustrates an example of the MAC CE format of a delay BSR in which a Buffer Size field of a legacy Long BSR is modified. Note that the delay BSR is not limited to the legacy Long BSR and may be a BSR obtained by modifying a Buffer Size field of the legacy BSR having the other format described above.

For example, as in a format 23A of Fig. 21A, the delay BSR includes an LCGi field as a first field, and a reduced Buffer Size j field and a Delay Info j field as modified second fields. The LCGi field indicates the presence of the reduced Buffer Size j field and the Delay Info j field for the LCGi.

As with the legacy Buffer Size j field, the reduced Buffer Size j field identifies the total amount of data available to all of the logical channels belonging to the corresponding LCGi. The reduced Buffer Size j field has, for example, a 6-bit size and this is shorter than the 8-bit size of the legacy Buffer Size j field. Note that the size of the reduced Buffer Size j field is not limited to this and may be any other size shorter than that of the legacy Buffer Size j field. In addition, the reduced Buffer Size j field may have a different size depending on the corresponding LCGi.

The reduced Buffer Size j field indicates an index corresponding to a Buffer Size (e.g., a Buffer Size level, a Buffer Size value, or a Buffer Size range) in an unillustrated table, for example, for a 6-bit Buffer Size field.

The Delay Info j field serving as a third field indicates information used for indicating delay information on the corresponding LCGi. The Delay Info j field has, for example, a 2-bit size and this is shorter than the 8-bit size of the legacy Buffer Size j field. The sum of the size of the reduced Buffer Size j field and the size of the Delay Info j field is equal to the size of the legacy Buffer Size j field. Note that the size of the Delay Info j field is not limited to this and may be any other size shorter than that of the legacy Buffer Size j field. In addition, the Delay Info j field may have a different size depending on the corresponding LCGi.

The Delay Info j field indicates the remaining time (e.g., indicated in units of milliseconds, slots, or subframes) before the expiry of the permissible delay of data belonging to the corresponding LCG. Note that the Delay Info j field may indicate an index corresponding to the remaining time (e.g., the value or range of the remaining time) or a flag (e.g., a flag indicating whether the remaining time is long or short) corresponding to the remaining time.

The reduced Buffer Size j field and the Delay Info j field are integrally treated and the combination of them is included in an ascending order depending on the LCGi.

Alternatively, for example, as in a format 23B of Fig. 21B, the delay BSR may include an LCGi field as a first field, and a legacy Buffer Size j field and a Delay Info i field as modified second fields.

In the format 23A, the Delay Info j field is replaced with part of a legacy Buffer Size field, but the Delay Info i field is added to a legacy Buffer Size field in the format 23B. For example, the Delay Info i field is added between the LCGi field and the legacy Buffer Size field. Note that the Delay Info i field may be added after the legacy Buffer Size field.

The content and the size of the Delay Info i field are similar those of the format 23A. The Buffer Size j field and the Delay Info i field are each included in an ascending order depending on the LCGi.

The delay BSR is distinguished from a BSR having another format. For example, the LCID/eLCID indicating the delay BSR is defined. This allows the delay BSR to be transmitted as a MAC CE. Note that the MAC CE of the delay BSR may be included and transmitted in a MAC PDU. That is, the MAC subheader including the LCID/eLCID indicating the delay BSR and the MAC CE of the delay BSR are included in the MAC subPDU, and the MAC PDU including the MAC subPDU is transmitted.

### (2) Delay BSR Configuration Information

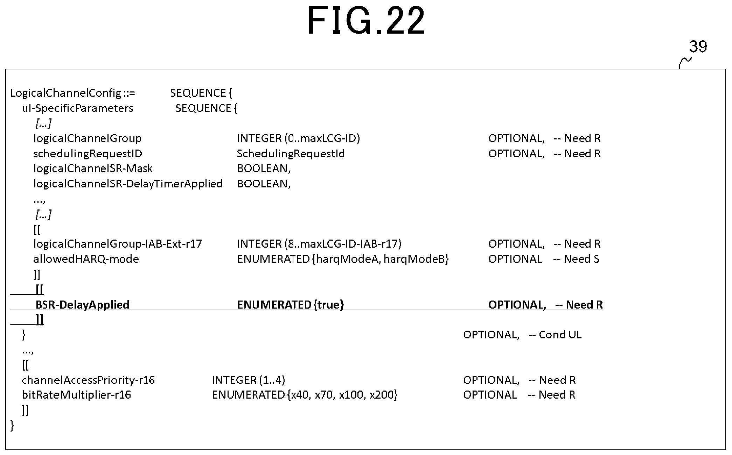

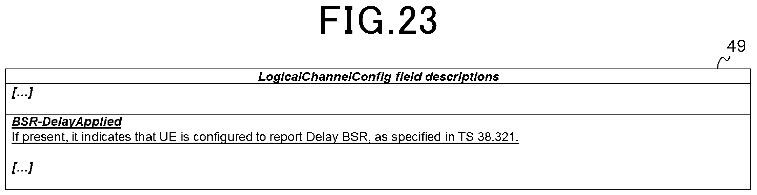

Configuration information (also referred to as delay BSR configuration information below) for determining whether a delay BSR according to the present embodiment is used is defined. The delay BSR configuration information is included in logical channel configuration information. This causes the delay BSR to be configured for each of the logical channels. The delay BSR configuration information will be described in detail with reference to Figs. 22 and 23.

Specifically, the delay BSR configuration information is included in LogicalChannelConfig. For example, as illustrated in information 39 of Fig. 22, BSR-DelayApplied serving as delay BSR configuration information may be included as a parameter of LogicalChannelConfig. Note that LogicalChannelConfig according to the present embodiment may be substantially the same as LogicalChannelConfig described in the first embodiment except for BSR-BSExtApplied and the portion associated with BSR-BSExtApplied may be replaced with BSR-DelayApplied.

In addition, the delay BSR configuration information is a flag. For example, as illustrated in a table 49 of Fig. 23, in a case where BSR-DelayApplied is present, BSR-DelayApplied indicates that the UE 200 is configured to report a delay BSR. In contrast, in a case where BSR-Delay Applied is not present, it is indicated that the UE 200 is not configured to report a delay BSR, that is, the UE 200 is configured to report a legacy BSR. Note that the delay BSR configuration information is not limited to a flag indicating, by the presence or absence thereof, whether a delay BSR is used and may be a flag indicating, by a value, whether a delay BSR is used. For example, in the case of a value of 0, the delay BSR configuration information may indicate that a legacy BSR is used. In the case of a value of 1, the delay BSR configuration information may indicate that a delay BSR is used.

### (3) Message Including Configuration Information

A message including delay BSR configuration information is substantially the same as a message including BS extended BSR configuration information and will not be thus described.

### (4) Operation of UE 200 Based on Configuration Information

The UE 200 according to the present embodiment determines, on the basis of the delay BSR configuration information obtained from a received RRC message, whether a delay BSR is used. For example, the UE 200 determines, on the basis of the delay BSR configuration information included in the logical channel configuration information, whether a delay BSR is used for the logical channel. In a case where the buffer status is reported for the LCG to which a logical channel for which the use of a delay BSR is determined belongs, the UE 200 uses the delay BSR.

For example, in a case where LogicalChannelConfig included in the received RRC message includes BSR-DelayApplied as illustrated in Fig. 22, the UE 200 uses the delay BSR as a BSR for the LCG including a logical channel for which LogicalChannelConfig is configured.

### (5) Flow of Processing

An example of processing according to the present embodiment will be described with reference to Fig. 13. Note that the processing from steps S310 to S340 is achieved by replacing the BS extended BSR according to the first embodiment with a delay BSR and replacing BSR-BSExtApplied according to the first embodiment with BSR-DelayApplied, and will not be thus described.

The UE 200 transmits an enhanced-BSR MAC CE to the base station 100 (step S350). For example, the UE 200 sets, for each of the LCGs, an index corresponding to the Buffer Size of UL data in the corresponding reduced Buffer Size field, sets delay information in the corresponding Delay Info field, and generates a delay BSR MAC CE as illustrated in Fig. 21A. Alternatively, the UE 200 sets, for each of the LCGs, an index corresponding to the Buffer Size of UL data in the corresponding Buffer Size field, sets delay information in the corresponding Delay Info field, and generates a delay BSR MAC CE as illustrated in Fig. 21B. The UE 200 transmits the generated delay BSR MAC CE to the base station 100. Note that the UE 200 may apply a logical channel prioritization (LCP) procedure and transmit an enhanced-BSR MAC CE (i.e., delay BSR MAC CE) as in the first embodiment.

In this way, according to the embodiment of the present disclosure, a modified second field included in an enhanced-BSR includes a second field and a third field different from the second field. This makes it possible to add information having different content and/or a format from those of information indicated by the second field.

In addition, the second field is a Buffer Size field indicating information used for indicating the total data amount of the respective logical channels of the at least corresponding one of the LCGs. The third field is a field indicating information used for indicating delay information on the at least corresponding one of the LCGs. The delay information indicates information used for indicating the remaining time before the expiry of the permissible delay of data belonging to the at least corresponding one of the LCGs. This makes it possible to report delay information on buffered data. It is therefore possible to schedule the data by taking the delay information into consideration. In particular, a PDB may be imposed on XR data and delay information is thus reported by using a delay BSR for the XR data, thereby allowing for scheduling that satisfies the PDB.

### <6-2. Modification Examples>

First to fifth modification examples according to the second embodiment of the present disclosure will be described. Note that two or more of these modification examples may be combined.

### (1) First Modification Example: Another Example of Delay BSR Configuration Information

In the embodiment of the present disclosure described above, the delay BSR configuration information is a flag. However, the delay BSR configuration information according to the embodiment of the present disclosure is not limited to this example.

As a first modification example 1 of the present embodiment, the delay BSR configuration information may be information on the length of at least one of modified second fields. Specifically, the delay BSR configuration information is information indicating the length of a third field. The delay BSR configuration information according to the present modification example will be described in detail with reference to Figs. 14 and 15.

For example, BSR-DelayInfoFieldLength serving as delay BSR configuration information is included as a parameter of LogicalChannelConfig instead of BSR-BufferSizeFieldLength illustrated in the information 33 of Fig. 14. For example, BSR-DelayInfoFieldLength indicates the length of a Delay Info field as with BSR-BufferSizeFieldLength illustrated in the table 43 of Fig. 15. For example, in a case where BSR-DelayInfoFieldLength is present, BSR-DelayInfoFieldLength indicates that the UE 200 is configured to report a delay BSR and indicates the length of a Delay Info field in the delay BSR. In contrast, in a case where BSR-DelayInfoFieldLength is not present, it is indicated that the UE 200 is not configured to report a delay BSR, that is, the UE 200 is configured to report a legacy BSR.

In addition, BSR-DelayInfoFieldLength may indicate information for indicating the length of a Delay Info field. For example, BSR-DelayInfoFieldLength indicates an index corresponding to the length (e.g., the value or the range of the length) of a Delay Info field.

In this way, according to the first modification example 1 of the present embodiment, the delay BSR configuration information may be information on the length of at least one of modified second fields. In addition, the delay BSR configuration information indicates the length of a third field, thereby making it possible to dynamically change the third field and the modified second field in length.

In addition, as a first modification example 2 of the present embodiment, the delay BSR configuration information may be information for identifying an LCG for which a delay BSR is used. Note that the present modification example is achieved by replacing the BS extended BSR according to the first modification example 2 of the first embodiment with a delay BSR and will not be thus described.

In addition, as a first modification example 3 of the present embodiment, the delay BSR configuration information may be information used for indicating the type of UL data. Note that the present modification example is achieved by replacing the BS extended BSR according to the first modification example 3 of the first embodiment with a delay BSR and will not be thus described.

### (2) Second Modification Example: Another Example of Configuration Information Including Delay BSR Configuration Information

In the embodiment of the present disclosure described above, the delay BSR configuration information is included in logical channel configuration information. However, the delay BSR configuration information according to the embodiment of the present disclosure is not limited to this example.

As a second modification example 1 of the present embodiment, the delay BSR configuration information may be included in LCG configuration information. Note that the present modification example is achieved by replacing the BS extended BSR according to the second modification example 1 of the first embodiment with a delay BSR and will not be thus described.

In addition, as a second modification example 2 of the present embodiment, the delay BSR configuration information may be included in SR configuration information. Note that the present modification example is achieved by replacing the BS extended BSR according to the second modification example 2 of the first embodiment with a delay BSR and will not be thus described.

In addition, as a second modification example 3 of the present embodiment, the delay BSR configuration information may be included in BSR configuration information. Note that the present modification example is achieved by replacing the BS extended BSR according to the second modification example 3 of the first embodiment with a delay BSR and will not be thus described.

### (3) Third Modification Example: Another Example of Format of Delay BSR

In the embodiment of the present disclosure described above, the delay BSR includes a first field and a modified second field. However, the delay BSR according to the embodiment of the present disclosure is not limited to this example.

As a third modification example of the present embodiment, the delay BSR may further includes at least one of second fields. At least one of modified second fields corresponds to an LCG of a plurality of LCGs, the LCG being identified on the basis of the delay BSR configuration information and the at least one of the second fields corresponds to an LCG other than the LCG of the plurality of LCGs identified on the basis of the delay BSR configuration information. In other words, a third field is added to only the second field corresponding to the LCG of the plurality of LCGs, the LCG being identified on the basis of the delay BSR configuration information, thereby only the second field is modified.

Specifically, the delay BSR includes a plurality of LCG fields, the combination of at least one of reduced Buffer Size fields and a Delay Info field, and at least one of legacy Buffer Size fields. The combination of the at least one of the reduced Buffer Size fields and the Delay Info field corresponds to an LCG of the plurality of LCGs, for which the use of a delay BSR is determined on the basis of the delay BSR configuration information. In addition, the at least one of the legacy Buffer Size fields corresponds to an LCG of the plurality of LCGs other than the LCG described above.

The present modification example will be described in detail with reference to Fig. 21A. For example, in the format 23A of Fig. 21A, it is assumed that Buffer Size 1 corresponds to LCGO and unillustrated Buffer Size 3 corresponds to LCG1. In a case where the use of a delay BSR for LCGO is determined, the delay BSR includes the combination of a 6-bit Buffer Size 1 field and a 2-bit Delay Info 1 field as the combination of a reduced Buffer Size field and a Delay Info field. In addition, in a case where the use of a delay BSR for LCG1 is not determined, the delay BSR includes an 8-bit Buffer Size 3 field as a legacy Buffer Size field.

Alternatively, the delay BSR may include a plurality of LCG fields, the combination of at least one of legacy Buffer Size fields and a Delay Info field, and at least one of legacy Buffer Size fields that is not accompanied by a Delay Info field. The combination of the at least one of the legacy Buffer Size fields and the Delay Info field corresponds to an LCG of the plurality of LCGs, for which the use of a delay BSR is determined on the basis of the delay BSR configuration information. In addition, the at least one of the legacy Buffer Size fields that is not accompanied by a Delay Info field corresponds to an LCG of the plurality of LCGs other than the LCG described above.

The present modification example will be described in detail with reference to Fig. 21B. For example, in the format 23B of Fig. 21B, it is assumed that Buffer Size 1 corresponds to LCG0 and unillustrated Buffer Size 3 corresponds to LCG1. In a case where the use of a delay BSR for LCG0 is determined, the delay BSR includes the combination of an 8-bit Buffer Size 1 field and a 2-bit Delay Info 0 field as the combination of a legacy Buffer Size field and a Delay Info field. In addition, in a case where the use of a delay BSR for LCG1 is not determined, the delay BSR includes an 8-bit Buffer Size 3 field as a legacy Buffer Size field and does not include Delay Info 1 unlike Fig. 23B.

In this way, according to the third modification example of the present embodiment, it is possible to modify a second field alone that requires delay information to be added and restrain a BSR from excessively increasing in size. As a result, it is possible to reduce communication resources wasted for transmitting a BSR.

### (4) Fourth Modification Example: Another Example of Field Indicating Delay Information

In the embodiment of the present disclosure described above, the modified second field includes a second field and a third field. However, the modified second field according to the embodiment of the present disclosure is not limited to this example.

As a fourth modification example of the present embodiment, the modified second field may be one field serving as both a second field and a third field. Specifically, at least one of modified second fields is a field indicating information used for indicating the total data amount of the respective logical channels of the at least corresponding one of LCGs and delay information on the at least corresponding one of the LCGs.

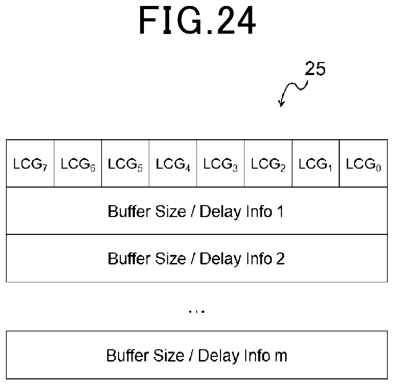

The format of the delay BSR according to the present modification example will be described in detail with reference to Fig. 24. Fig. 24 illustrates an example of the MAC CE format of a delay BSR in which a Buffer Size field of a legacy Long BSR is modified. Note that the delay BSR according to the present modification example is not limited to the legacy Long BSR and may be a BSR obtained by modifying a Buffer Size field of a legacy BSR having another format.

For example, as illustrated in a format 25 of Fig. 24, a delay BSR includes a plurality of LCG fields and at least one of Buffer Size/Delay Info fields. The LCGi field indicates the presence of the Buffer Size/Delay Info j field for the LCGi. The Buffer Size/Delay Info field indicates an index corresponding to the combination of a Buffer Size and delay information. A table indicating the correspondence between the index and the combination of the Buffer Size and the delay information is defined. Note that the Buffer Size/Delay Info j field is included in an ascending order depending on the LCGi.

Note that Fig. 24 illustrates an example in which the size of a Buffer Size/Delay Info field is the same as the size of a legacy Buffer Size field, but the size of the Buffer Size/Delay Info field may be greater or less than the size of the legacy Buffer Size field. For example, the Buffer Size/Delay Info field may have a 16-bit, 24-bit, or larger size.

In addition, as in the third modification example of the present embodiment, the delay BSR may further include at least one of second fields. In other words, only a second field corresponding to an LCG of a plurality of LCGs identified on the basis of delay BSR configuration information is modified into a Buffer Size/Delay Info field.

In this way, according to the fourth modification example of the present embodiment, in a delay BSR, at least one of modified second fields is a field indicating information used for indicating the total data amount of the respective logical channels of the at least corresponding one of LCGs and delay information on the at least corresponding one of the LCGs. This makes it possible to manage the Buffer Size and the delay information within one field in the BSR. It is therefore possible to simplify processing of receiving the BSR (i.e., processing of analyzing the field).

### (5) Fifth Modification Example: Compliance with Other TSs

In the above-mentioned examples of the embodiment of the present disclosure, the system 1 is a system compliant with the TSs of 5G or NR. However, the system 1 according to the embodiment of the present disclosure is not limited to this example. As in the fourth modification example of the first embodiment, the system 1 may be a system compliant with other TSs.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in processing described in the present specification do not necessarily have to be performed chronologically in the order described in the flowchart or the sequence diagram. For example, steps in processing may be performed in an order different from the order described as the flowchart or the sequence diagram or may be performed in parallel. In addition, some of steps in processing may be removed or a further step may be added to the processing.

For example, there may be provided a method including the operations of one or more components of the apparatus described in the present specification or there may be provided a program for causing a computer to perform the operations of the components. Moreover, there may be provided a non-transitory tangible computer-readable storage medium having stored therein the program. Naturally, such a method, program, and non-transitory tangible computer-readable storage medium are also included in the present disclosure.

For example, one or more components of a base station described herein may be included in a module for the base station and the module may be provided. That is, there may be provided a module for a base station that performs processing of the base station described herein.

For example, one or more components of a user equipment (UE) described herein may be included in a module for the UE and the module may be provided. That is, there may be provided a module for a UE that performs processing of the UE described herein.

For example, in the present disclosure, a user equipment (UE) may be referred to by another name such as terminal apparatus, terminal, mobile station, mobile terminal, mobile apparatus, mobile unit, subscriber station, subscriber terminal, subscriber apparatus, subscriber unit, radio station, radio terminal, radio apparatus, radio unit, wireless station, wireless terminal, wireless apparatus, wireless unit, access station, access terminal, access apparatus, access unit, remote station, remote terminal, remote apparatus, or remote unit.

For example, in the present disclosure, a UE may be a mobile phone terminal such as a smartphone, a tablet terminal, a personal computer, a mobile router, or a wearable device. Alternatively, the UE may be an apparatus installed in a mobile object or may be the mobile object itself. The mobile object may be a vehicle such as a car and a train, a flying object such as an aircraft and a drone, or another mobile object such as a vessel. Alternatively, in the present disclosure, the UE may be another internet of things (IoT) device such as a sensor and a camera. The UE may move or be fixed.

For example, in the present disclosure, "transmit" may mean performing processing of at least one layer in a protocol stack used for transmission or physically transmitting a signal wirelessly or by wire. Alternatively, "transmit" may mean a combination of performing the processing of the at least one layer and physically transmitting a signal wirelessly or by wire. Similarly, "receive" may mean performing processing of at least one layer in a protocol stack used for reception or physically receiving a signal wirelessly or by wire. Alternatively, "receive" may mean a combination of performing the processing of the at least one layer and physically receiving a signal wirelessly or by wire. The at least one layer may be replaced with at least one protocol.

For example, in the present disclosure, "obtain/acquire" may mean obtaining/acquiring information from stored information, obtaining/acquiring information from information received from another node, or obtaining/acquiring information by generating the information.

For example, in the present disclosure, "include" and "comprise" do not mean that listed items alone are included, but mean that listed items alone may be included or a further item may be included in addition to the listed items.

For example, in the present disclosure, "or" does not mean exclusive OR, but means inclusive OR.

Note that the technical features included in the above-mentioned embodiments may be represented as the following features. Naturally, the present disclosure is not limited to the following features.

### (Feature 1)

An apparatus (200) including:
a communication processing unit (233) configured to receive a message including configuration information for determining whether a buffer status report is used, the buffer status report including at least one of first fields and at least one of modified second fields; and
an information obtaining unit (231) configured to obtain the configuration information included in the message, in which
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

### (Feature 2)

The apparatus according to Feature 1, in which the configuration information is included in logical channel configuration information.

### (Feature 3)

The apparatus according to Feature 1, in which the configuration information is included in logical channel group configuration information.

### (Feature 4)

The apparatus according to Feature 1, in which the configuration information is included in scheduling request configuration information.

### (Feature 5)

The apparatus according to Feature 1, in which the configuration information is included in buffer status report configuration information.

### (Feature 6)

The apparatus according to any one of Features 1 to 5, in which the configuration information is a flag.

### (Feature 7)

The apparatus according to any one of Features 1 to 5, in which the configuration information is information on a length of the at least one of the modified second fields.

### (Feature 8)

The apparatus according to any one of Features 1 to 3, in which the configuration information is information for identifying a logical channel group for which the buffer status report is used.

### (Feature 9)

The apparatus according to any one of Features 1 to 5, in which the configuration information is information used for indicating a type of uplink data.

### (Feature 10)

The apparatus according to any one of Features 1 to 9, in which
the buffer status report further includes at least one of second fields,
the at least one of the logical channel groups is a plurality of logical channel groups,
the at least one of the modified second fields corresponds to a logical channel group of the plurality of logical channel groups, the logical channel group being identified on a basis of the configuration information, and
the at least one of the second fields corresponds to a logical channel group other than the logical channel group of the plurality of logical channel groups identified on the basis of the configuration information.

### (Feature 11)

The apparatus according to any one of Features 1 to 10, in which the at least one of the modified second fields is the second field increased in size.

### (Feature 12)

The apparatus according to Feature 11, in which the at least one of the modified second fields is a buffer size field indicating information used for indicating a total data amount of respective logical channels of the at least corresponding one of the logical channel groups.

### (Feature 13)

The apparatus according to any one of Features 1 to 10, in which the at least one of the modified second fields includes the second field and a third field different from the second field.

### (Feature 14)

The apparatus according to Feature 13, in which
the second field is a buffer size field indicating information used for indicating a total data amount of respective logical channels of the at least corresponding one of the logical channel groups,
the third field is a field indicating information used for indicating delay information on the at least corresponding one of the logical channel groups, and
the delay information indicates information used for indicating remaining time before the expiry of permissible delay of data belonging to the at least corresponding one of the logical channel groups.

### (Feature 15)

The apparatus according to any one of Features 1 to 10, in which
the at least one of the modified second fields is a field indicating information used for indicating a total data amount of respective logical channels of the at least corresponding one of the logical channel groups and delay information on the at least corresponding one of the logical channel groups, and
the delay information indicates information used for indicating remaining time before the expiry of permissible delay of data belonging to the at least corresponding one of the logical channel groups.

### (Feature 16)

The apparatus according to any one of Features 1 to 15, in which the apparatus is a user equipment or a module for a user equipment.

### (Feature 17)

An apparatus (100) including:
an information obtaining unit (141) configured to obtain configuration information for determining whether a buffer status report is used, the buffer status report including at least one of first fields and at least one of modified second fields; and
a communication processing unit (143) configured to transmit a message including the configuration information, in which
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

### (Feature 18)

The apparatus according to Feature 17, in which the apparatus is a base station or a module for a base station.

### (Feature 19)

A method performed by an apparatus (200), including:
receiving a message including configuration information for determining whether a buffer status report is used, the buffer status report including at least one of first fields and at least one of modified second fields; and
obtaining the configuration information included in the message, in which
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

### (Feature 20)

A method performed by an apparatus (100), including:
obtaining configuration information for determining whether a buffer status report is used, the buffer status report including at least one of first fields and at least one of modified second fields; and
transmitting a message including the configuration information, in which
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

### (Feature 21)

A program for causing a computer to execute operations of:
receiving a message including configuration information for determining whether a buffer status report is used, the buffer status report including at least one of first fields and at least one of modified second fields; and
obtaining the configuration information included in the message, in which
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

### (Feature 22)

A program for causing a computer to execute operations of:
obtaining configuration information for determining whether a buffer status report is used, the buffer status report including at least one of first fields and at least one of modified second fields; and
transmitting a message including the configuration information, in which
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

### (Feature 23)

A non-transitory tangible computer-readable storage medium having stored therein a program for causing a computer to execute operations of:
receiving a message including configuration information for determining whether a buffer status report is used, the buffer status report including at least one of first fields and at least one of modified second fields; and
obtaining the configuration information included in the message, in which
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

### (Feature 24)

A non-transitory tangible computer-readable storage medium having stored therein a program for causing a computer to execute operations of:
obtaining configuration information for determining whether a buffer status report is used, the buffer status report including at least one of first fields and at least one of modified second fields; and
transmitting a message including the configuration information, in which
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

## Claims

1. An apparatus (200) comprising:
a communication processing unit (233) configured to receive a message including configuration information for determining whether a buffer status report is used, the buffer status report including at least one of first fields and at least one of modified second fields; and
an information obtaining unit (231) configured to obtain the configuration information included in the message, wherein
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

2. The apparatus according to claim 1, wherein the configuration information is included in logical channel configuration information.

3. The apparatus according to claim 1, wherein the configuration information is a flag.

4. The apparatus according to claim 1, wherein the configuration information is information on a length of the at least one of the modified second fields.

5. The apparatus according to claim 1, wherein the configuration information is information for identifying a logical channel group for which the buffer status report is used.

6. The apparatus according to claim 1, wherein the configuration information is information used for indicating a type of uplink data.

7. The apparatus according to claim 1, wherein
the buffer status report further includes at least one of second fields,
the at least one of the logical channel groups is a plurality of logical channel groups,
the at least one of the modified second fields corresponds to a logical channel group of the plurality of logical channel groups, the logical channel group being identified on a basis of the configuration information, and
the at least one of the second fields corresponds to a logical channel group other than the logical channel group of the plurality of logical channel groups identified on the basis of the configuration information.

8. The apparatus according to any one of claims 1 to 7, wherein the at least one of the modified second fields is the second field increased in size.

9. The apparatus according to claim 8, wherein the at least one of the modified second fields is a buffer size field indicating information used for indicating a total data amount of respective logical channels of the at least corresponding one of the logical channel groups.

10. The apparatus according to any one of claims 1 to 7, wherein the at least one of the modified second fields includes the second field and a third field different from the second field.

11. The apparatus according to claim 10, wherein
the second field is a buffer size field indicating information used for indicating a total data amount of respective logical channels of the at least corresponding one of the logical channel groups,
the third field is a field indicating information used for indicating delay information on the at least corresponding one of the logical channel groups, and
the delay information indicates information used for indicating remaining time before the expiry of permissible delay of data belonging to the at least corresponding one of the logical channel groups.

12. The apparatus according to any one of claims 1 to 7, wherein
the at least one of the modified second fields is a field indicating information used for indicating a total data amount of respective logical channels of the at least corresponding one of the logical channel groups and delay information on the at least corresponding one of the logical channel groups, and
the delay information indicates information used for indicating remaining time before the expiry of permissible delay of data belonging to the at least corresponding one of the logical channel groups.

13. An apparatus (100) comprising:
an information obtaining unit (141) configured to obtain configuration information for determining whether a buffer status report is used, the buffer status report including at least one of first fields and at least one of modified second fields; and
a communication processing unit (143) configured to transmit a message including the configuration information, wherein
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

14. A method performed by an apparatus (200), comprising:
receiving a message including configuration information for determining whether a buffer status report is used, the buffer status report including at least one of first fields and at least one of modified second fields; and
obtaining the configuration information included in the message, wherein
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.

15. A method performed by an apparatus (100), comprising:
obtaining configuration information for determining whether a buffer status report is used, the buffer status report including at least one of first fields and at least one of modified second fields; and
transmitting a message including the configuration information, wherein
the buffer status report is used for providing information on an uplink data amount,
the at least one of the first fields indicates at least one of logical channel groups for which a buffer status is reported, and
the at least one of the modified second fields corresponds to the at least one of the logical channel groups and is associated with the uplink data amount.
